(19) Europäisches Patentamt
European Patent Office
Office européen des brevets

(11) **EP 4 571 006 A1**

(12) **EUROPÄISCHE PATENTANMELDUNG**

(43) Veröffentlichungstag:
**18.06.2025   Patentblatt 2025/25**

(21) Anmeldenummer: 24216398.8

(22) Anmeldetag: **29.11.2024**

(51) Internationale Patentklassifikation (IPC):
*E04C 2/296* (2006.01)    *E04B 1/18* (2006.01)
*E04B 1/26* (2006.01)    *E04B 1/76* (2006.01)
*E04B 2/70* (2006.01)    *E04C 2/38* (2006.01)
*E04C 2/24* (2006.01)

(52) Gemeinsame Patentklassifikation (CPC):
**E04C 2/386; E04B 1/18; E04B 1/26; E04B 1/7604;
E04B 2/707; E04C 2/243; E04C 2/296**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität:  **14.12.2023  DE 102023135130**

(71) Anmelder: **Weinmann Holzbausystemtechnik
GmbH
72813 St. Johann (DE)**

(72) Erfinder:
• **Wagner, Mathias
71254 Ditzingen (DE)**
• **Goller, Michael
72525 Münsingen (DE)**
• **Groß, Jörg
72531 Hohenstein (DE)**

(74) Vertreter: **Dürr - Corporate IP
Dürr AG
Carl-Benz-Straße 34
74321 Bietigheim-Bissingen (DE)**

(54)   **VERFAHREN ZUR HERSTELLUNG VON GEBÄUDEELEMENTEN**

(57)     Die Erfindung betrifft ein Verfahren zur Herstellung von mehrteiligen Gebäudeelementen aufweisend mehrere Tragelemente (6.2) umfassend folgende Arbeitsschritte: Tragelemente derart auf einem Arbeitstisch positionieren und aneinander befestigen, dass eine Tragstruktur entsteht, bereitstellen und ablegen von einem plattenförmigen Bauteil (6.6) auf dem tragenden Gebäudeelement, wobei das plattenförmige Bauteil derart abgelegt wird, dass die Tragstruktur auf der abzulegenden Seite zumindest annäherungsweise abgedeckt wird und befestigen des plattenförmigen Bauteils an den Tragelementen. Hiermit ist es erstmalig möglich ein verbessertes Verfahren mit einer höheren Flexibilität und/oder mit einer höheren Integrationstiefe von Komponenten, zur Herstellung von mehrteiligen Gebäudeelementen bereitzustellen.

Fig. 6

**Beschreibung**

Die Erfindung betrifft ein Verfahren zur Herstellung von mehrteiligen Gebäudeelementen nach Anspruch 1 sowie eine Vorfertigungslinie und eine Fertigungsanlage zur Herstellung von Gebäudeelementen.

Die Herstellung von vorgefertigten Gebäudeelementen könnte künftig in industriellem Maßstab erfolgen. Bei dieser Art der Herstellung werden Gebäudeelemente eines Gebäudes in einer Fertigungsanlage vorgefertigt. Die vorgefertigten Gebäudeelemente werden anschließend an einen entfernten Bauplatz geliefert und dort zusammengebaut. Solche vorgefertigten Gebäudeelemente können für eine Vielzahl von Zwecken verwendet werden, unter anderem als temporäre oder permanente Gebäude, wie Wohnhäuser, Geschossbauten, kommerzielle Büros, Bildungs- oder Dienstleistungsvorrichtungen.

Verfahren zur Herstellung von Gebäudeelementen weisen derzeit einen hohen Grad an manuellen Bearbeitungsschritten auf, wobei die einzelnen Verfahrensschritte einer Fertigungsanlage in der Regel unflexibel aufeinander abgestimmt sind. Zudem ist die Integrationstiefe von einzelnen Komponenten in die vorgefertigten Gebäudeelemente sehr gering, womit ein hoher manueller Aufwand auf einem entfernt liegenden Bauplatz bei der Errichtung des Gebäudes notwendig ist.

Es ist daher die Aufgabe der vorliegenden Erfindung, ein verbessertes Verfahren oder zumindest ein alternatives Verfahren, zur Herstellung von mehrteiligen Gebäudeelementen bereitzustellen. Insbesondere soll ein Verfahren mit einer höheren Flexibilität und/oder mit einer höheren Integrationstiefe von Komponenten vorgeschlagen werden.

Diese Aufgabe wird durch den Gegenstand der unabhängigen Patentansprüche gelöst. Bevorzugte Ausführungsformen sind Gegenstand der abhängigen Patentansprüche.

Die vorliegende Erfindung betrifft zum einen ein Verfahren zur Herstellung von mehrteiligen Gebäudeelementen, aufweisend mehrere Tragelemente, insbesondere Tragbalken, umfassend die folgenden Arbeitsschritte: Positionieren der Tragelemente auf einem Arbeitstisch. Herstellen einer Tragstruktur durch Befestigen der Tragelemente aneinander und/oder Fixieren der Tragelemente gegeneinander. Bereitstellen und Ablegen eines plattenförmigen Bauteils auf der Tragstruktur, wobei das plattenförmige Bauteil derart abgelegt wird, dass dieses die Tragstruktur auf einer Seite zumindest näherungsweise abdeckt. Befestigen des plattenförmigen Bauteils an der Tragstruktur. Durch eine angepasste Kombination von Tragelementen und plattenförmigen Bauteilen ist es möglich, ein Verfahren zur Herstellung eines Gebäudeelementes bereitzustellen, welches eine hohe Flexibilität hinsichtlich der Gestaltung, insbesondere hinsichtlich der Größe und/oder des Aufbaus der Gebäudeelemente aufweist.

Im Sinne der vorliegenden Erfindung wird unter einem Gebäudeelement sowohl ein statisch tragendes als auch nicht-tragendes Teil eines Gebäudes verstanden. Insbesondere sollen darunter Wand-, Decken-, Boden- und/oder Dachelemente eines Gebäudes verstanden werden. Gebäudeelemente umfassen im Sinne der Erfindung eine Vielzahl von Bauteilen, insbesondere Tragelemente, plattenförmige Bauteile, Verbindungselemente und/oder Befestigungselemente.

Unter einem Tragelement wird ein Bauteil verstanden, welches im Zusammenbau Bestandteil einer Tragstruktur des Gebäudeelements ist. Hierunter fallen unter anderem Tragbalken, Stützpfosten, verleimte Tragbalkenstrukturen oder Fachwerke. Tragelemente können eine Vielzahl von Materialien umfassen, unter anderem Materialien aus nachwachsenden Rohstoffen, insbesondere Holz und Holzwerkstoffen, Holzverbundwerkstoffen, Kunststoffen, Metallen oder aus einem anderen für die Eigenschaft als Tragelement bevorzugten Material. In einer bevorzugten Ausgestaltung umfasst ein Tragelement eine Sandwichbaukonstruktion aufweisend eine Lage aus einem Material aus einem nachwachsenden Rohstoff und einer Lage aus einem Kunststoff, insbesondere einem Kunststoffrecyclat und/oder einer Mischung aus einem Kunststoff und einem Holzfaserstoff. In einer weiteren bevorzugten Ausgestaltung sind gewisse Tragelemente aus Holz, Holzwerkstoff und/oder einem Holzverbundwerkstoff aufgebaut, da diese eine für Gebäudeelemente notwendige Stabilität aufweisen und sich einfach bearbeiten lassen. Holz und/oder Holzwerkstoffe sind nachwachsende Rohstoffe und weisen daher eine gute Verfügbarkeit in den für die Gebäudeelemente notwendigen Mengen auf, sie können ohne technische Schwierigkeiten gelagert und somit bevorratet werden. Unter plattenförmigen Bauteilen werden im Sinne der vorliegenden Erfindung Bauteile verstanden, welche eine flache, zumindest annäherungsweise ebene Struktur aufweisen, die im Verhältnis zur Erstreckung der Fläche eine geringe Dicke aufweisen. Die plattenförmigen Bauteile erfüllen eine Vielzahl von Aufgaben. Unter anderem werden die plattenförmigen Bauteile zum Abdecken und/oder Verschließen der Tragstruktur vorgesehen. Weitere Aufgaben der plattenförmigen Bauteile können Trägerfunktionen für weitere Komponenten der Gebäudeelemente sein. Wobei insbesondere unterschiedliche plattenförmige Bauteile hierzu verwendet werden können. Die unterschiedlichen plattenförmigen Bauteile erfüllen unterschiedliche Aufgaben, die an moderne Gebäudeelemente gestellt werden. Insbesondere erfüllen die plattenförmigen Bauteile Brandschutz-, Schallschutz-, Wärme- und/oder Kälteschutzaufgaben. Zugleich können sie nach dem Verbau zu einer Versteifung einer mit ihnen verbundenen Tragstruktur beitragen. Plattenförmige Bauteile können eine Vielzahl an Materialien umfassen, unter anderem Holz, Holzwerkstoffe, Holzfasersysteme, insbesondere Weichholzfasern, Holzverbundwerkstoffe, Kunststoffe, Gips, Gipsfaserwerkstoff, Mischungen aus den genannten Materialien und/oder ein anderes für die jeweils gewünschte Eigenschaft benötigtes Material. In einer bevorzugten Ausgestaltung sind die plattenförmigen Bauteile im Wesentlichen aus einem Holzwerkstoff hergestellt. In einer besonders bevorzugten Ausgestaltung können die plattenförmigen Bauteile im Wesentlichen aus einem Gipswerkstoff und/oder ein Gipsfaserwerkstoff hergestellt sein, um besondere Brandschutzvorgaben für die Gebäudeelemente einzuhalten. Bei einer alternativen Ausgestaltung der plattenförmigen Bauteile mit einer oder mehreren Materiallagen aus Weichholzfasern wird ein erhöhter Schallschutz für die Gebäudeelemente realisiert. In einer weiteren besonders bevorzugten Ausgestaltung weist das plattenförmige Bauteil mehrere Lagen unterschiedlicher Materialien auf, insbesondere Lagen aus einem Kunststoffmaterial, aus einem Material aus natürlich nachwachsenden Rohstoffen, insbesondere Holz, und/oder aus einem Gipsmaterial. Eine Kombination verschiedener Materialien in einem einzigen plattenförmigen Bauteil führt dazu, die Anforderungen an den Brand-, Schall-, Wärme- und/oder Kälteschutz mit nur diesem einen plattenförmigen Bauteil zu erfüllen.

In besonders bevorzugten Ausgestaltungen können einzelne plattenförmige Bauteile miteinander kombiniert werden, um die jeweiligen Eigenschaften für die Gebäudeelemente zu erzielen.

In einer bevorzugten Ausgestaltung des Verfahrens nach Anspruch 1 wird das plattenförmige Bauteil in einer oder mehreren Vorfertigungslinie derart bearbeitet, dass das plattenförmige Bauteil einem Maß X der Tragstruktur entspricht. In einer bevorzugten Ausgestaltung entspricht das Maß X zumindest annähernd der Höhe der Tragstruktur. In einer alternativen Ausgestaltung entspricht das Maß X einem Mindermaß der Höhe der Tragstruktur. Unter einer Höhe einer Tragstruktur wird im vorliegenden Zusammenhang der Erfindung das Maß verstanden, welches die Tragstruktur im senkrecht aufgebauten Zustand vom geodätisch unteren Bauteileende zum geodätisch oberen Bauteilende hat.

Unter einem Mindermaß wird ein Maß verstanden, welches um eine Differenz kleiner ist als die Höhe der Tragstruktur. Durch die Bearbeitung der plattenförmigen Bauteile in einer Vorfertigungslinie ist es möglich, die plattenförmigen Bauteile derart auf der Tragstruktur abzulegen und zu befestigen, dass diese zumindest annäherungsweise bündig mit den Tragelementen abschließen. Somit werden die bisher notwendigen Nachbearbeitungsvorgänge reduziert, oder sie entfallen in besonders bevorzugten Fällen.

In einer Vorfertigungslinie im Sinne der Erfindung ist ein vorgelagerter Bearbeitungsschritt eines Bauteils eines Gebäudeelements, insbesondere der Tragelemente und/oder der plattenförmigen Bauteile, ausführbar. Hiermit wird es ermöglicht, das Verfahren zur Herstellung der Gebäudeelemente auf einer Hauptfertigungslinie flexibler zu gestalten, da notwendige Bearbeitungsschritte an einer oder mehreren Vorfertigungslinie durchgeführt werden.

Eine Vorfertigungslinie der Fertigungsanlage umfasst beispielhaft eine erste Vorfertigungseinrichtung, eine zweite Vorfertigungseinrichtung, eine dritte Vorfertigungseinrichtung und/oder eine vierte Vorfertigungseinrichtung. Die Nummerierung dient hierbei der Unterscheidung, jedoch nicht zur Festlegung einer bestimmten Anzahl an Vorfertigungseinrichtungen.

Bevorzugt weist die Fertigungsanlage eine zweite Vorfertigungslinie auf. Diese kann ein erstes Lager zur Lagerung von plattenförmigen Bauteilen, eine Plattenaufteilvorrichtung zur Bearbeitung der plattenförmigen Bauteile und insbesondere ein zweites Lager umfassen. Das zweite Lager ist derart gestaltet, dass die Ablage der bearbeiteten plattenförmigen Bauteile im zweiten Lager in umgekehrter Reihenfolge zur Entnahme für einen nachgelagerten Bearbeitungsschritt erfolgt. Bevorzugt ist dem zweiten Lager eine Fördereinheit, insbesondere eine selbststeuernde Fördereinheit, zugeordnet, mit der die bearbeiteten plattenförmigen Bauteile der Hauptfertigungslinie zugeführt werden.

Unter einer Plattenaufteilvorrichtung zur Bearbeitung der plattenförmigen Bauteile soll jegliche Bearbeitungsvorrichtung verstanden werden, welche zur Längenanpassung und/oder zur Erzeugung einer Ausnehmung oder Aussparung verwendet werden kann. Insbesondere sollen unter anderem jegliche spanabhebende Bearbeitungsvorrichtungen, insbesondere Säge-, Schneid-, Hobel-, Schleif- und Fräsvorrichtungen, als erfindungsgemäße Plattenaufteilvorrichtung verstanden werden.

Unter einem Lager im Sinne der Erfindung wird jede Lagervorrichtung verstanden, in der plattenförmige Bauteile zu lagern sind. Insbesondere werden darunter Lagervorrichtungen verstanden, in denen Platten hochkant und/oder in einer Art Regalsystem mit mehreren Ebenen zu lagern sind. In einer alternativen Ausgestaltung kann das Lager derart ausgestaltet sein, dass in der Lagervorrichtung die zu lagernden plattenförmigen Bauteile nach Größe sortiert gelagert werden können. In einer weiteren alternativen Ausgestaltung kann die Lagervorrichtung bewegbar, insbesondere selbststeuernd bewegbar, gestaltet sein, um die gelagerten Platten von der zweiten Vorfertigungslinie an die Hauptfertigungslinie zu befördern. Eine derartige bewegbare Lagervorrichtung kann eines oder mehrere fahrerlose Transportfahrzeuge umfassen.

Unter einer Fördereinheit wird im Sinne der Erfindung jegliche Fördervorrichtung verstanden, welche zur Beförderung der auf der Vorfertigungseinrichtung oder -linie bearbeiteten Bauteile verwendet werden kann. Insbesondere soll unter einer Fördereinheit ein Roboter verstanden werden, welcher die zu befördernden Bauteile von einer Vorfertigungseinrichtung oder -linie zur Hauptfertigungslinie selbsttätig bzw. autonom transportiert. Besonders bevorzugt kann eine Fördereinheit alternativ oder zusätzlich eines oder mehrere fahrerlose Transportfahrzeuge umfassen. In einer alternativen Ausgestaltung kann unter einer Fördereinheit eine lineare Fördervorrichtung, insbesondere ein Kettenförderer, ein Rollen- und/oder ein Förderband verstanden werden.

In einer weiteren bevorzugten Ausgestaltung wird ein plattenförmiges Bauteil derart in einer Vorfertigungslinie bearbeitet, dass das plattenförmige Bauteil zumindest teilweise eine Aussparung aufweist. Die Aussparung kann in einer bevorzugten Ausgestaltung für einen Durchgang, eine Tür, ein Fenster und/oder ein weiteres Bauteil konfektioniert sein. Besonders bevorzugt können für die plattenförmigen Bauteile weitere Bearbeitungsschritte, insbesondere das Anfasen der Kantenbereiche und/oder das Einbringen von Bohrungen vorgesehen sein. Unter Anfasen wird in der vorliegenden Erfindung das Ab- und/oder Anschrägen der Kanten der plattenförmigen Bauteile und/oder der erzeugten Schnittkanten der plattenförmigen Bauteile verstanden.

In einem weiteren besonders vorzugsweisen Verfahrensschritt wird das plattenförmige Bauteil aufweisend eine Aussparung oder zumindest einen Teil einer Aussparung auf der Tragstruktur annäherungsweise deckungsgleich mit einer Aussparung in der Tragstruktur abgelegt und positioniert. Wenn die zumindest teilweise Aussparung in einer der Vorfertigungslinien in ein plattenförmiges Bauteil eingebracht wird, ergibt sich eine besonders flexible Hauptfertigungslinie, auf der dann bereits vorkonfektionierte Bauteile angeliefert und verbaut werden können. Dies ermöglicht eine hohe Varianz an zu bearbeitenden Gebäudeelementen auf der Hauptfertigungslinie.

In einer bevorzugten Ausgestaltung wird das plattenförmige Bauteil mit der Aussparung derart auf der Tragstruktur positioniert und abgelegt, dass eine Kante des plattenförmigen Bauteils näherungsweise parallel zu einer Kante einer Aussparung im Gebäudeelement ist.

Hierdurch ist es möglich, eine Aussparung der plattenförmigen Bauteile im Gebäudeelement auf eine einfache Weise derart zu positionieren, dass die Aussparung des plattenförmigen Bauteils und die Aussparung des Gebäudeelements fluchten.

In einer weiteren bevorzugten Ausgestaltung des Verfahrens wird ein plattenförmiges Bauteil mittels eines Roboters an und/oder auf der Tragstruktur abgelegt, positioniert und/oder befestigt, wobei der Roboter das plattenförmige Bauteil aus einem Vorrat von bearbeiteten plattenförmigen Bauteilen und aus einem Vorrat von weiteren plattenförmigen Bauteilen derart auswählt, dass die Tragstruktur zumindest teilweise abgedeckt wird, wobei die von einer Vorfertigungslinie bearbeiteten Platten und/oder die weiteren Platten über eine Fördereinheit, insbesondere eine selbststeuernde Fördereinheit, zu einem Roboter gefördert wird. Hierdurch ist es möglich, zumindest einen halbautomatisierten, insbesondere vollautomatisierten, Verfahrensschritt einer Hauptfertigungslinie zur Herstellung von Gebäudeelementen bereitzustellen.

In einer weiteren bevorzugten Ausgestaltung des Verfahrens werden eine Vielzahl von plattenförmigen Bauteilen auf der Tragstruktur derart abgelegt, dass die plattenförmigen Bauteile eine erste Lage auf der Tragstruktur bilden. Zwei aneinander angrenzende plattenförmige Bauteile weisen einen Kontaktbereich auf. Dieser Kontaktbereich ist zumindest annähernd in der Mitte eines Tragelements positioniert. Die plattenförmigen Bauteile weisen im Verhältnis zu den Tragelementen einen 1,5 bis 10 mal so hohen Längenausdehnungskoeffizienten $\alpha$ auf. In einer bevorzugten Ausgestaltung kann der Längenausdehnungskoeffizient $\alpha$ 3- bis 6-mal so hoch sein.

Mit dem Längenausdehnungskoeffizienten $\alpha$ wird das Verhalten eines Stoffes bezüglich der Veränderung seiner Abmessungen bei einer Temperaturänderung dT beschrieben. Der Längenausdehnungskoeffizient $\alpha$ eines Bauteils mit der Länge L ist die Proportionalitätskonstante zwischen der Temperaturänderung dT und der relativen Längenänderung $\frac{dL}{L}$, wobei dL der Längenänderung des Bauteils entspricht. Mit ihm wird demnach die relative Längenänderung bei einer Temperaturänderung beschrieben. Er ist eine stoffspezifische Größe, die die Einheit $K^{-1}$ hat und über die folgende Gleichung definiert wird $\alpha L = \frac{dL}{dT}$.

Hiermit ist es möglich, Gebäudeelemente derart herzustellen, dass bei unterschiedlichen Temperaturen an der Fertigungsanlage und am Bauplatz die Bauteile der Gebäudeelemente eine ähnliche Längenausdehnung aufweisen. Damit entstehen zwischen den einzelnen Bauteilen nur geringe Spannungen. Aufgrund der geringeren Spannungen zwischen den einzelnen Bauteilen werden weniger Relativbewegungen innerhalb der einzelnen Gebäudeelemente erzeugt. Damit ist eine geringere Toleranzabstimmung der einzelnen Gebäudeelemente zueinander notwendig.

In einem weiteren bevorzugten Verfahrensschritt des erfindungsgemäßen Verfahrens wird auf das plattenförmige Bauteil, welches eine erste Lage auf der Tragstruktur bildet, ein weiteres plattenförmiges Bauteil abgelegt und/oder positioniert.

Durch das Ablegen eines weiteren plattenförmigen Bauteils ist es möglich, verschiedene Strukturen von Gebäudeelementen zu schaffen. Somit ist es möglich, ein Gebäudeelement mit mindestens zwei Lagen von plattenförmigen Bauteilen bereitzustellen, womit auf einfache Weise eine Kombination der gewünschten Brand-, Schall-, Wärme- und/oder Kälteschutzeigenschaften ermöglicht wird, ohne die weiteren Eigenschaften des Gebäudeelements zu beeinflussen.

In einer besonders bevorzugten Ausgestaltung kann der Verfahrensschritt mehrfach wiederholt werden, um eine Struktur des Gebäudeelements mit einer Vielzahl an Lagen zu erzeugen. Vorzugsweise werden hierbei die plattenförmigen Bauteile einer Lage derart nebeneinander abgelegt, dass die einzelnen plattenförmigen Bauteile aneinander anliegen, wobei eine Stoßfuge zwischen den einzelnen plattenförmigen Bauteilen entsteht. Die plattenförmigen Bauteile einer weiteren Lage werden vorzugsweise derart versetzt auf die plattenförmigen Bauteile der einen Lage abgelegt, dass die Stoßfuge der plattenförmigen Bauteile der einen Lage von den plattenförmigen Bauteilen der weiteren Lage abgedeckt werden. Besonders bevorzugt werden die plattenförmigen Bauteile der weiteren Lage derart auf die plattenförmigen Bauteile der einen Lage abgelegt, dass die Stoßfuge der plattenförmigen Bauteile der einen Lage annähernd mittig zu den plattenförmigen Bauteilen der weiteren Lage angeordnet ist. Vorzugsweise sind die plattenförmigen Bauteile der einen und der weiteren Lage aus einem Gips- und/oder Gipsfaserwerkstoff hergestellt. Somit ist es möglich, eine besonders hohe Steifigkeit des Gebäudeelements mit einer Kombination der gewünschten Brand-, Schall-, Wärme- und/oder Kälteschutzeigenschaften derart zu kombinieren, dass das Gebäudeelement für den Geschossbau eines Mehrfamilienhauses geeignet ist.

In einer weiteren bevorzugten Ausgestaltung des Verfahrens wird ein plattenförmiges Bauteil in der dritten Vorfertigungseinrichtung mit einer Montageeinheit derart bearbeitet, dass dem plattenförmigen Bauteil eine zusätzliche Komponente hinzugefügt wird. Diese zusätzliche Komponente kann ein Teil eines Beschattungssystems sein. In einer weiteren bevorzugten Ausgestaltung ist das Teil des Beschattungssystems ein Gehäuse eines Beschattungssystems, wie beispielsweise ein Rollladenkasten oder ein Aufnahmegehäuse für eine Jalousie. In einer besonders bevorzugten Ausgestaltung ist das Teil des Beschattungssystems eine Versorgungsleitung, beispielsweise ein Strom- und/oder Datenkabel, um das Beschattungssystem mit Strom zu versorgen und/oder über eine Steuerung anzusteuern.

In einer besonders bevorzugten Ausgestaltung wird das plattenförmige Bauteil in der dritten Vorfertigungseinrichtung derart bearbeitet, dass das plattenförmige Bauteil eine Vielzahl von zusätzlichen Komponenten, insbesondere eine Kombination von Teilen eines Beschattungssystems aufweist.

In einer weiteren besonders bevorzugten Ausgestaltung sind die zusätzlichen Komponenten der einzelnen Gebäudeelemente, welche auf dem Bauplatz in einem nachgelagerten Schritt aneinander angeordnet aufgebaut werden, derart zueinander ausgerichtet, dass die jeweiligen zusätzlichen Komponenten des einen Gebäudeelements mit einer zusätzlichen Komponente eines weiteren Gebäudeelements gekoppelt werden können, insbesondere über ein zusätzliches Adapterbauteil gekoppelt werden können. Hierdurch ist es möglich ein Beschattungssystem über eine geplante Eckverglasung eines Gebäudes bereitzustellen. Ebenso ist hierdurch die Möglichkeit gegeben, dass ein Schalter zum Ansteuern des Beschattungssystems an einem Gebäudeelement vorgesehen ist, während das Beschattungssystem an einem weiteren Gebäudeelement angeordnet ist.

Bevorzugt weist die dritte Vorfertigungseinrichtung eine Montageeinheit zur Befestigung einer Komponente an einem plattenförmigen Bauteil auf, wobei die Komponente ein Teil oder eine Kombination von Teilen eines Beschattungssystems ist. Durch die Befestigung einer weiteren Komponente in der dritten Vorfertigungseinrichtung ist es möglich, eine erhöhte Integrationstiefe der Gebäudeelemente bei einer hohen Flexibilität der Hauptfertigungslinie bereitzustellen.

Bevorzugt weist die Fertigungsanlage eine Vielzahl von dritten Vorfertigungseinrichtungen für die Befestigung von zusätzlichen Komponenten an einem plattenförmigen Bauteil auf. Hierdurch wird die Möglichkeit geschaffen, zusätzliche Komponenten des Beschattungssystems derart aufzuteilen, dass ein effizienter Arbeitsablauf bereitgestellt wird. In einer besonders bevorzugten Ausgestaltung können die einzelnen Vorfertigungseinrichtungen derart zueinander angeordnet sein, dass die bearbeiteten plattenförmigen Bauteile entweder direkt zur Hauptfertigungslinie oder zu einer weiteren Vorfertigungseinrichtung befördert werden, um eine mögliche weitere zusätzliche Komponente zu befestigen.

In einer weiteren bevorzugten Ausgestaltung des Verfahrens wird das plattenförmige Bauteil derart an der Tragstruktur angeordnet, dass die abkragende zusätzliche Komponente des plattenförmigen Bauteils in einen Raum zwischen zwei Tragelementen der Tragstruktur ragt. Hierdurch ist es möglich, eine oder mehrere zusätzliche Komponenten platzsparend im Gebäudeelement zu platzieren. Zudem wird eine zusätzliche Komponente für die weitere Montage und/oder den Transport geschützt positioniert, da diese sich zwischen den Tragelementen im Inneren des Gebäudeelements befindet und nicht aus dem Gebäudeelement herausragt, womit die Gefahr eines Abbrechens, Abscherens oder einer vergleichbaren Beschädigung beim Transport oder der Montage des Gebäudeelements am Bauplatz verhindert oder zumindest reduziert wird.

In einer besonders bevorzugten Ausgestaltung des Verfahrens weist das Gebäudeelement eine erste Lage von plattenförmigen Bauteilen auf, welche eine Aussparung aufweist, insbesondere eine Aussparung, welche durch ein spanabhebendes Verfahren an zumindest einem plattenförmigen Bauteil der ersten Lage gebildet ist. Die Aussparung ist derart gestaltet, dass die zusätzliche Komponente des plattenförmigen Bauteils im montierten Zustand in die Aussparung ragt. Durch den vorgeschlagenen Aufbau des Gebäudeelements ist es möglich, den Raum zwischen den Tragelementen der wärme- und/oder kälteisolierende Dämmschicht zur Verfügung zu stellen und die zusätzliche Komponente in einen mehrlagigen Aufbau der plattenförmigen Bauteile zu integrieren.

In einem alternativen Aufbau des Gebäudeelements weist die Lage, welche die Aussparung für die zusätzliche Komponente aufweist, Weichholzfasermaterial auf. Weichholzfasermaterial weist einen guten Schallschutzwert auf, womit bei Sanitär- und/oder Lüftungsanlagenteilen eine zusätzliche Schallschutzummantelung der zusätzlichen Komponente eingespart werden kann.

In einer weiteren bevorzugten Ausgestaltung des Verfahrens werden mehrere Tragelemente zu einer Tragstruktur eines Gebäudeelements auf einer Hauptfertigungslinie mit einer Bearbeitungsvorrichtung bearbeitet, während zeitgleich auf einer Vorfertigungslinie, welche eine Vorfertigungseinrichtung in Form einer weiteren Bearbeitungsvorrichtung für die Bearbeitung eines Bauteils eines Gebäudeelements aufweist, ein Bauteil eines Gebäudeelements bearbeitet wird. Insbesondere wird auf der Vorfertigungslinie ein Bauteil desselben Gebäudeelements bearbeitet, zu dem auf der Hauptfertigungslinie eine Tragstruktur gefertigt wird. In diesem Fall werden das Bauteil und die Tragstruktur in nachfolgenden Verfahrensschritten miteinander verbunden. In einer abgewandelten Variante wird auf der Vorfertigungslinie ein Bauteil eines anderen weiteren Gebäudeelements bearbeitet, das in einem späteren Verfahrensschritt mit einer anderen weiteren Tragstruktur verbunden wird.

In einer besonders bevorzugten Ausführungsform bilden mehrere Vorfertigungseinrichtungen eine Vorfertigungslinie, die einer Hauptfertigungslinie zugeordnet ist, wobei in der Vorfertigungslinie und in der Hauptfertigungslinie unterschiedliche Bauteile zeitgleich bearbeitet werden. Nach der Bearbeitung auf der Vorfertigungslinie werden Bauteile von dort zu einer Lagereinheit und/oder direkt an die Hauptfertigungslinie befördert. Hiermit ist es möglich, zeitgleich mehrere Bauteile flexibel auf der Hauptfertigungslinie und auf der Vorfertigungslinie zu bearbeiten, womit die Produktionsmenge pro Zeit erhöht werden kann, da benötigte Vorarbeiten flexibel in den Vorfertigungseinrichtungen zeitgleich durchgeführt werden können.

In einer weiteren bevorzugten Ausgestaltung des Verfahrens wird ein Bauteil auf einer Vorfertigungslinie bearbeitet und nachfolgend an eine Bearbeitungsvorrichtung der Hauptfertigungslinie gefördert, um ein Gebäudeelement zu erzeugen.

Insbesondere werden eine Vielzahl von Bauteilen auf einer Vielzahl von Vorfertigungseinrichtungen zeitgleich und/oder mit einem zeitlichen Versatz bearbeitet. Die Vielzahl an bearbeiteten Bauteilen werden an die entsprechenden Bearbeitungsvorrichtungen der Hauptfertigungslinie für die nächste Bearbeitung oder in einen Lagerbereich befördert. Somit ist eine Fertigung der Gebäudeelemente auf der Hauptfertigungslinie sehr flexibel gestaltbar, da die zur Herstellung notwendigen Bauteile bereitstehen und somit die Produktionsmenge pro Zeit erhöht werden kann.

In einer besonders bevorzugten Ausgestaltung wird das Bauteil von einer Vorfertigungslinie an die Hauptfertigungslinie selbststeuernd, insbesondere mit Hilfe eines Roboters, befördert, womit weniger Personal für die Fertigung der Gebäudeelemente benötigt wird.

In einer weiteren bevorzugten Ausgestaltung des Verfahrens weist das Verfahren folgende weitere Schritte auf: Wenden des Gebäudeelements derart, dass die Tragstruktur auf dem plattenförmigen Bauteil auf einem Arbeitstisch derart aufliegt, dass ein Raum zwischen den Tragelementen zugänglich wird. Einlegen eines Strukturbauteils auf das plattenförmige Bauteil in den Raum zwischen den Tragelementen des Gebäudeelements. Einbringen eines Füllmaterials in den Raum zwischen den Tragelementen, wobei das Füllmaterial anhand des Strukturbauteils im Raum verteilt und zumindest annähernd in Position gehalten wird.

Im Sinne der Erfindung wird unter einem Strukturbauteil eine dreidimensionale Struktur, insbesondere ein Steg oder eine Strebe verstanden. In einer alternativen Ausgestaltung wird unter einem Strukturbauteil eine Struktur mit einer Gitter-, einer Rechteck-, einer Rauten-, einer Kreisförmigen- und/oder einer Wabenstruktur, aufweisend Stege und/oder Streben, verstanden. Die Rechtecke, Rauten, Kreise und/oder Waben bilden (ggf. mit den Stegen) Kammern, in welche das Füllmaterial eingebracht werden kann. Die Struktur unterteilt ein nachträglich einzubringendes Füllmaterial in separate Teilmengen und hält das Füllmaterial zumindest annähernd in Position. Unter "in Position gehalten und/oder gehalten" wird im Sinne des vorliegenden Aspekts der Erfindung verstanden, dass dem Füllmaterial nur ein geringfügiger Bewegungsspielraum ermöglicht wird. Dadurch ist sichergestellt, dass eine gleichmäßige Verteilung des Füllmaterials erhalten bleibt. Durch die Kammern wird der Bewegungsspielraum des Schüttguts auf die Kammern reduziert, womit es zu weniger Setzung und/oder Abrieb des Schüttguts kommt. Hiermit ist es möglich, einen gleichmäßigen Schall-, Wärme- und/oder Kälteschutz auf einfache Weise in einem Gebäudeelement bereitzustellen. Das Strukturbauteil kann sowohl an den Tragelementen als auch an einem dem Strukturbauteil zugewandten plattenförmigen Bauteil befestigt werden. Durch die Befestigung des Strukturbauteils an den Tragelementen und/oder den plattenförmigen Bauteilen wird das Gebäudeelement zusätzlich versteift. Als Befestigung kann eine reibschlüssige und formschlüssige Befestigung, insbesondere eine Klemmung, eine Verschraubung, Vernietung und/oder Verklippung des Bauteils vorgesehen sein. In einer bevorzugten Ausgestaltung wird das Strukturbauteil derart in den Hohlraum des Gebäudeelements eingebracht, dass das Strukturbauteil innerhalb des Gebäudeelements zu den Tragelementen hin bewegbar ist. Dabei kann das Strukturbauteil auch ohne Verwendung eines Füllmaterials verwendet werden. Durch das Einbringen des Füllmaterials im Hohlraum wird ein eingelegtes Strukturbauteil zumindest annähernd in Position gehalten, indem das Füllmaterial um das Strukturbauteil und zwischen den Tragelementen verteilt wird. In einer bevorzugten Ausführung umfasst das Strukturbauteil ein faserhaltiges Material, besonders bevorzugt einen Kunststoff, insbesondere ein Kunststoffrecyclat, ein Kraftpapier und/oder einen Verbundwerkstoff aus Kunststoff und Fasern. Ein Strukturbauteil aus einem solchen Material ist besonders kostengünstig herstellbar. In einer alternativen bevorzugten Ausgestaltung umfasst das Strukturbauteil ein metallisches, insbesondere ein korrosionsarmes metallisches Material. Ein Strukturbauteil aus einem metallischen Material kann besonders hohe Kräfte übertragen und versteift ein Gebäudeelement besonders gut.

Unter einem Füllmaterial wird im Sinne der Erfindung jegliches schüttbare, einblasbare, schaumartige und/oder einlegbare Material verstanden, welches dazu geeignet ist, einen Bauraum auszufüllen. Insbesondere sollen unter dem schüttbaren Material inerte Schüttgüter, insbesondere Kunststoffe, und/oder auf natürlicher Basis hergestellte schüttbare Materialien, wie Split und/oder Perlite, verstanden werden.

In einer weiteren bevorzugten Ausführung des Verfahrens umfasst das Füllmaterial ein Schüttgut, ein einblasbares Material und/oder ein einlegbares Material. Das Schüttgut kann insbesondere ein inertes Schüttgut, mit einer Körnung von 1 mm bis 10 mm, bevorzugt mit einer Körnung von 2 mm bis 5 mm, sein. Das einblasbare Material kann insbesondere ein faserbasiertes und/oder kugelförmiges Material umfassen. Besonders bevorzugt werden Holzweichfasern, Zellulose oder Kunststoffkugeln als einblasbares Material verwendet. Das einlegbare Material kann insbesondere ein faserhaltiges Bahnmaterial, bevorzugt ein holzfaserhaltiges Bahnmaterial umfassen.

Das einblasbare Material hat sich in weiteren Untersuchungen als besonders gut in der Kombination von Schall-, Wärme- und/oder Kälteschutzisolation erwiesen.

Unter einem einlegbaren Material sollen insbesondere Dämmmatten, vorzugsweise aufweisend ein faserhaltiges Material, der bereits genannten Stoffe verstanden werden. Die Aufzählungen der einzelnen Materialien sollen im Sinne der Erfindung nicht abschließend verstanden werden. Es können für den Anwendungsfall auch Kombinationen der genannten Materialien verwendet werden.

In einer weiteren bevorzugten Ausführung des Verfahrens weist das Strukturbauteil eine dreidimensionale Struktur mit mehreren Streben und/oder Stegen auf, welche in einer Draufsicht die Form einer Vielzahl von Kreisen, Rechtecken und/oder Waben aufweist. In Untersuchungen hat sich gezeigt, dass mit Hilfe der genannten Strukturen, insbesondere der wabenförmigen Struktur, eine homogene Verteilung des Schüttguts unterstützt und das Schüttgut besonders vorteilhaft in Position gehalten wird.

Bevorzugt ist zwischen den Tragelementen ein oben genanntes Strukturbauteil, vorgesehen, wobei die Höhe des Strukturbauteils ca. 50 bis 75 % der Höhe der Tragelemente entspricht. Dabei wird ein Schüttgut der oben genannten Art zur Befüllung des Strukturbauteils verwendet. In einem weiteren Verfahrensschritt wird ein einlegbares Füllmaterial auf das Strukturbauteil aufgelegt, wobei die Höhe des einlegbaren Füllmaterials derart gewählt wird, dass die Höhe des Schüttguts und die Höhe des einlegbaren Füllmaterials in Summe der Höhe der Tragelemente entsprechen. In einer besonders bevorzugten Ausführung kann die Summe der Höhe des Schüttguts und des einlegbaren Füllmaterials mit einem (geringen) Übermaß, insbesondere mit einem Übermaß von 1 % bis 10%, zur Höhe der Tragelemente ausgeführt sein. In einem weiteren Verfahrensschritt werden Schüttgut und/oder Füllmaterial mit Hilfe eines plattenförmigen Bauteils auf die Höhe der Tragelemente komprimiert, womit das Schüttgut und/oder das Füllmaterial besonders zuverlässig in Position gehalten werden. Hierdurch ist es auch möglich, die Eigenschaften der verschiedenen Füllmaterialien derart zu kombinieren, dass unterschiedliche Eigenschaften, insbesondere Brand-, Schall-, Wärme- und/oder Kälteschutz, in einem Gebäudeelement auf einfache Weise integriert werden können.

In einer weiteren bevorzugten Ausgestaltung des Verfahrens weist das Strukturbauteil ein faserstoffhaltiges Material mit einer Vielzahl von annäherungsweise sechseckigen Wabenstrukturen auf. Das Strukturbauteil ist auf einer Seite mit einem plattenförmigen faserstoffhaltigen Element bedeckt. Damit wird das Schüttgut annähernd in Position gehalten. Das Strukturbauteil weist bevorzugt eine Höhe von 20 mm bis 300 mm, insbesondere 60 mm bis 150 mm auf. Das Schüttgut umfasst ein rieselfähiges Material mit einer Schüttdichte von 1.000 kg/m$^3$ bis 2.000 kg/m$^3$, vorzugsweise 1.400 kg/m$^3$ bis 1.600 kg/m$^3$. Durch diese spezielle Ausgestaltung ist es möglich, ein besonders gut schallgeschütztes Gebäudeelement bereitzustellen, da das Schüttgut eine hohe Schüttdichte aufweist, womit Schall gut reflektiert und/oder absorbiert wird. Bei einem Schüttgut mit einer Schüttdichte von 1.000 kg/m$^3$ bis 2.000 kg/m$^3$ ist ein besonders steifes Strukturbauteil vorteilhaft, um Deformierungen des Strukturbauteils zu verhindern und das Schüttgut in Position zu halten.

In einer weiteren bevorzugten Ausgestaltung des Verfahrens wird die Tragstruktur mit plattenförmigen Bauteilen belegt, wobei die plattenförmigen Bauteile derart auf der Tragstruktur abgelegt werden, dass ein Strukturbauteil und/oder ein Füllmaterial von mehreren Seiten durch die Tragstruktur und die plattenförmige Bauteile eingeschlossen sind. Das Strukturbauteil weist bevorzugt wabenförmige Kammern auf. In den Kammern ist ein Schüttgut angeordnet. Durch das Ablegen der plattenförmigen Bauteile wird das Schüttgut in den Kammern eingeschlossen. Durch das Einschließen des Schüttguts in den Kammern kann sich das Schüttgut nur noch im Bereich einer Kammer bewegen. Damit ändert sich der Massenmittelpunkt des Gebäudeelements aufgrund von Bewegungen des Gebäudeelements nur geringfügig, falls sich das Schüttgut bewegen sollte.

In einem alternativen Verfahrensschritt wird das Gebäudeelement mit mehreren Lagen von plattenförmigen Bauteilen belegt, wobei das (ggf. wabenförmige) Strukturbauteil verschlossen wird. Durch die unterschiedlichen Lagen an plattenförmigen Bauteilen wird das gesamte Gebäudeelement versteift. Eine Versteifung ist insbesondere bei Füllmaterialien mit einer hohen Schüttdichte, insbesondere einer Schüttdichte von annähernd 1.400 kg/m$^3$, relevant, um eine Durchbiegung der Gebäudeelemente zu vermeiden. Zudem kann eine zusätzliche Lage aus einem schallabsorbierenden Material verwendet werden, womit der Schallschutz verbessert wird.

Die Erfindung betrifft des Weiteren eine Vorfertigungslinie zur Bearbeitung von Bauteilen der Gebäudeelemente. Die Vorfertigungslinie weist eine Montageeinheit oder eine Plattenaufteilvorrichtung zur Bearbeitung von plattenförmigen Bauteilen auf. Ferner weist die Vorfertigungslinie vorzugsweise ein Modullager oder ein zweites Lager auf. Die Ablage der bearbeiteten plattenförmigen Bauteile im Modullager oder im zweiten Lager erfolgt in umgekehrter Reihenfolge zur Entnahme für einen nachgelagerten Bearbeitungsschritt. Die Vorfertigungslinie weist eine Fördereinheit auf, um die bearbeiteten plattenförmigen Bauteile der Hauptfertigungslinie zuzuführen. Vorzugsweise ist die Fördereinheit eine selbststeuernde Fördereinheit.

Durch die Vorfertigungslinie können Bauteile für die Hauptfertigungslinie vorkonfektioniert werden. Damit ist eine variable Fertigung von unterschiedlichen Gebäudeelementen auf einer Hauptfertigungslinie möglich.

In einer bevorzugten Ausgestaltung der Vorfertigungslinie umfasst die Montageeinheit oder die Plattenaufteilvorrichtung eine spanabhebende Bearbeitungsvorrichtung zur Anpassung der Maße oder zur Erzeugung von Ausnehmungen in einem der plattenförmigen Bauteile. Vorzugsweise ist die spanabhebende Bearbeitungsmaschine eine Fräs-, Säge- und/oder Schneidvorrichtung.

Hierdurch können bereits in der Vorfertigungslinie die plattenförmigen Bauteile der Gebäudeelemente für die Hauptfertigungslinie angepasst werden.

In einer weiteren bevorzugten Ausgestaltung der Vorfertigungslinie umfasst die Montageeinheit eine Bearbeitungsvorrichtung zur Befestigung einer Komponente an einem plattenförmigen Bauteil. Die Komponente umfasst ein Teil eines Beschattungssystems. Der Teil des Beschattungssystems ist vorzugsweise ein Gehäuse eines Beschattungssystems und/oder ein Strom- und/oder Datenkabel zur Versorgung und/oder Ansteuerung des Beschattungssystems.

Hiermit ist es möglich in einer Vorfertigungslinie bereits einzelne Komponenten der herzustellenden Gebäudeelemente an Bauteile der Gebäudeelemente zu montieren. Hiermit wird die Effizienz der Hauptfertigungslinie erhöht.

Die Erfindung betrifft des Weiteren eine Fertigungsanlage zur Herstellung von mehrteiligen Gebäudeelementen. Die Fertigungsanlage weist eine Hauptfertigungslinie mit einer Bearbeitungsvorrichtung und eine Vorfertigungslinie auf, wobei die Vorfertigungslinie im Bereich der entsprechenden Bearbeitungsvorrichtung der Hauptfertigungslinie derart angeordnet ist, dass das bearbeitete Bauteil der Vorfertigungslinie zum Zeitpunkt der weiteren Bearbeitung an die entsprechende Bearbeitungsvorrichtung der Hauptfertigungslinie gefördert wird. Hiermit wird eine flexible Hauptfertigungslinie bereitgestellt, welche komplexe Gebäudeelemente mit einer hohen Fertigungstiefe ermöglichen. Die Fertigungsanlage ist insbesondere zur Durchführung des vorstehend beschriebenen Verfahrens geeignet und vorgesehen.

In einer bevorzugten Ausgestaltung weist die Fertigungsanlage eine Hauptfertigungslinie mit einer ersten Mehrzahl von Bearbeitungsvorrichtungen auf, welche in einer Linie hintereinander angeordnet sind. Die Fertigungsanlage weist zudem eine Vorfertigungslinie mit einer zweiten Mehrzahl von Bearbeitungsvorrichtungen auf. Die Vorfertigungslinie ist auf einer Seite benachbart zu der Hauptfertigungslinie angeordnet. Bevorzugt ist die Vorfertigungslinie zwischen der Hauptfertigungslinie und einer tragenden Struktur einer Werkshalle angeordnet.

Die tragende Struktur ermöglicht es zusätzliche Bearbeitungsvorrichtungen, Vorrichtungen und/oder Komponenten für die Bearbeitung auf der Vorfertigungslinie und/oder der Hauptfertigungslinie an der tragenden Struktur zu befestigen. Hierdurch ist es möglich, den Platzbedarf für die Bearbeitungsvorrichtungen gering zu halten. Wodurch es möglich ist, dass die Bearbeitungsvorrichtungen der Vorfertigungslinien über einen Verbindungsweg versorgt werden können und die Abstände der Bearbeitungsvorrichtungen der Vorfertigungslinie zu den Bearbeitungsvorrichtungen der Hauptfertigungslinie kurzgehalten werden. Zudem kann der Flächenbedarf für die Bearbeitungsvorrichtungen der Vorfertigungslinie geringgehalten werden. Zudem können die Förderwege kurz gehalten werden.

In einer weiteren bevorzugten Ausgestaltung weist die Fertigungsanlage eine zweite Vorfertigungslinie mit folgenden Teileinheiten auf: Ein erstes Lager, eine Plattenaufteilvorrichtung, insbesondere eine spanabhebende Bearbeitungsvorrichtung für plattenförmige Bauteile, und ein zweites Lager für bearbeitete plattenförmige Bauteile. Die Bearbeitungsvorrichtung kann insbesondere eine Fräs-, eine Säge-, eine Schleif- und/oder eine Schneidvorrichtung umfassen, um die Konfektionierung der zu bearbeitenden plattenförmigen Bauteile durchzuführen. Das erste Lager, die Plattenaufteilvorrichtung und das zweite Lager sind in einer Linie hintereinander angeordnet. Die zweite Vorfertigungsline ist in Bezug zur Hauptfertigungslinie insbesondere im nahezu rechten Winkel zu dieser und insbesondere auf der gegenüberliegenden Seite der Hauptfertigungslinie bezogen auf eine erste Vorfertigungslinie, angeordnet. Zwischen dem zweiten Lager der zweiten Vorfertigungslinie und einer oder mehrerer der Bearbeitungsvorrichtungen der Hauptfertigungslinie ist eine Fördereinheit vorgesehen. In einer bevorzugten Ausgestaltung kann die Fördereinheit eine selbststeuernde Fördereinheit sein. Hiermit wird eine besonders flexible Anbindung einer Vorfertigungslinie an die Hauptfertigungslinie ermöglicht. Bevorzugt können dabei sowohl das erste Lager als auch das zweite Lager der zweiten Vorfertigungslinie von mehreren Seiten bedient werden, womit vom zweiten Lager mehrere Fördereinheiten die bearbeiteten Bauteile an mehrere Bearbeitungsvorrichtungen der Hauptfertigungslinie, insbesondere zeitgleich, befördern können.

Insbesondere weist eine erfindungsgemäße Hauptfertigungslinie eine oder mehrere der nachfolgend beschriebenen Arbeitsstationen auf:

Eine Tragstrukturstation, die zum Bilden einer Tragstruktur konfiguriert ist. Die Tragstrukturstation ist derart konfiguriert, dass mit ihr eine Tragstruktur eines Gebäudeelements hergestellt werden kann, indem die Tragelemente zwischen einem oberen und einem unteren Tragelementen positioniert und befestigt werden, wobei das obere Tragelement eine Oberkante und das untere Tragelement eine Unterkante eines Gebäudeelements definieren, wobei vertikale und/oder innenliegende Tragelemente in einer ersten Vorfertigungseinrichtung bearbeitet werden, vorzugsweise gefräst, gebohrt und/oder auf die definierten Maße zurecht gesägt. Nachfolgend werden die konfektionierten Tragelemente für die Tragstrukturstation bereitgestellt. In einer bevorzugten Ausführungsform wird in der Tragstrukturstation die Tragelemente derart aneinander befestigt, dass die Tragstruktur Aussparungen aufweist, um Fenster und/oder Türen im Gebäudeelement vorzusehen.

Eine Abdeckstation, die dazu konfiguriert ist, eine oder eine Vielzahl von plattenförmigen Bauteilen, welche der Station über eine Transportvorrichtung und/oder einen Lagerbereich bereitgestellt werden, auf einer zuvor produzierten Tragstruktur zu positionieren. In einer bevorzugten Ausgestaltung ist die Abdeckstation derart konfiguriert, dass die plattenförmigen Bauteile zumindest annäherungsweise bündig mit einem Tragelement, insbesondere dem oberen und/oder dem unteren Tragelement, der Tragstruktur positioniert werden. In einer alternativen Ausgestaltung werden die plattenförmigen Bauteile in einem vorbestimmten Muster auf der Tragstruktur platziert. Das vorbestimmte Muster für die Platzierung der plattenförmigen Bauteile wird mit Hilfe einer Computersimulation erstellt, wobei für die Erstellung mindestens die Maße der Tragstruktur, sowie die Position und die Größe der Aussparungen angegeben werden. Bevorzugt wird das vorbestimmte Muster für die Platzierung der plattenförmigen Bauteile mit Hilfe einer Computersimulation auf Basis einer statischen Berechnung der später zu erstellenden Gebäudekonstruktion erstellt. Die Abdeckstation ist weiterhin derart konfiguriert, dass die plattenförmigen Bauteile mit einer Vielzahl von Befestigungselementen zumindest vorübergehend an der Tragstruktur befestigt werden, wobei die Befestigungselemente derart positioniert sind, dass diese in die Tragstruktur eingreifen. In einer bevorzugten Ausführungsform ist die Abdeckstation derart konfiguriert, dass eine weitere Lage an plattenförmigen Bauteilen auf die bereits befestigte Lage an plattenförmigen Bauteilen positioniert und abgelegt werden. Die plattenförmigen Bauteile sind dabei derart vorkonfektioniert, dass diese zumindest annäherungsweise die gleichen Abmessungen wie die plattenförmigen Bauteile der ersten Lage aufweisen. In einer besonders bevorzugten Ausführung weisen die plattenförmigen Bauteile der zweiten Lage unterschiedliche Abmessungen als die plattenförmigen Bauteile der ersten Lage auf, oder sie werden in einer anderen Position zur ersten Lage positioniert und abgelegt. Dadurch ist es möglich, dass die Kontaktbereiche der plattenförmigen Bauteile der ersten Lage durch die plattenförmigen Bauteile der zweiten Lage überdeckt werden. Hiermit ist eine steifere Ausgestaltung des gesamten Gebäudeelements möglich. Zudem wird die Winddichtigkeit des Gebäudeelements verbessert.

In einer weiteren bevorzugten Ausgestaltung können noch weitere Lagen von plattenförmigen Bauteilen vorgesehen sein. Insbesondere können die plattenförmigen Bauteile der ersten, der zweiten und der weiteren Lagen die gleichen oder unterschiedliche Werkstoffe umfassen. Besonders bevorzugt umfasst die erste Lage einen Holz- oder Holzverbundwerkstoff, die zweite Lage einen Weichholzfaserwerkstoff und die weiteren Lagen einen Gips- oder Gipsfaserwerkstoff. In einer alternativen Ausgestaltung umfassen die ersten beiden Lagen einen Holz- oder Holzverbundwerkstoff, die zweite Lage einen Weiholzfaserwerkstoff und die weiteren Lagen einen Gips- oder Gipsfaserwerkstoff. Hiermit ist es möglich, stabile Gebäudeelemente mit einem hohen Schallschutz bereitzustellen. Die Befestigung der zweiten und weiteren Lagen an der Tragstruktur ist derart ausgestaltet, dass die Befestigungselemente der zweiten Lage durch die erste Lage in die Tragstruktur eingreifen sowie dass die Befestigungselemente der zweiten Lage zu den Befestigungselemente der ersten Lage beabstandet sind. Die Art der Befestigung der weiteren Lagen erfolgt analog der Befestigung der zweiten Lage.

In einer besonders bevorzugten Ausgestaltung ist der Abdeckstation eine zweite Vorfertigungseinrichtung zugeordnet. Die zweite Vorfertigungseinrichtung weist einen Arbeitstisch, eine spanabhebende Bearbeitungsvorrichtung, insbesondere eine Schneid-, Säge- und/oder Fräsvorrichtung, und einen Vorratsbereich, zur Lagerung der für den Arbeitsschritt benötigten plattenförmigen Bauteile auf. In der zweiten Vorfertigungseinrichtung werden die plattenförmigen Bauteile derart konfektioniert, dass notwendige Aussparungen und Bohrungen sowie Vorbohrungen bereits vor der Positionierung der plattenförmigen Bauteile auf der Tragstruktur in die plattenförmigen Bauteile eingebracht werden. Hierdurch ist es mögliche eine Vielzahl von Gestaltungsvarianten der Gebäudeelemente auf einer Hauptfertigungslinie vorzusehen.

Eine Modulintegrationsstation der Hauptfertigungslinie ist derart konfiguriert, dass ein plattenförmiges Bauteil auf dem Gebäudeelement abgelegt und befestigt wird, wobei das plattenförmige Bauteil eine abkragende Komponente aufweist. Die abkragende Komponenten kann ein Teil eines Beschattungssystems sein. In einer bevorzugten Ausgestaltung ist die Modulintegrationsstation derart konfiguriert, dass das plattenförmige Bauteil durch einen Roboter abgelegt und befestigt wird. Um das plattenförmige Bauteil auf dem Gebäudeelement zumindest annäherungsweise flächig abzulegen, muss am Gebäudeelement im Bereich der abkragenden Komponente ein Raum und/oder eine Aussparung vorhanden sein und/oder erzeugt werden. Die Aussparung wird vor dem Ablegen des Bauteils vorzugsweise über einen spanabhebenden Bearbeitungsschritt, insbesondere mittels Fräsung, an der entsprechenden Stelle erzeugt. Bei einer alternativen Erzeugung der Aussparung werden die plattenförmigen Bauteile in der Abdeckstation derart auf der Tragstruktur abgelegt und befestigt, dass hierbei eine Aussparung, insbesondere die notwendige Aussparung, erzeugt wird.

Die mit der weiteren Komponente vorkonfektionierten plattenförmigen Bauteile werden von einer dritten Vorfertigungseinrichtung bereitgestellt.

Die dritte Vorfertigungseinrichtung weist eine Montageeinheit, eine Modulfördereinheit und ein Modullager auf.

Die Montageeinheit weist einen Arbeitstisch, eine Sägeeinheit, eine Hebevorrichtung und einen Bereich, in dem Abfälle aus der Bearbeitung der plattenförmigen Bauteile gesammelt werden, auf. In einer bevorzugten Ausgestaltung weist die Hebevorrichtung einen Roboter auf. Der Roboter ist derart konfiguriert, dass die Position der plattenförmige Bauteile auf dem Arbeitstisch geändert werden kann.

Die weitere Komponente wird am plattenförmigen Bauteil verschraubt, verklemmt, getackert und/oder verklebt. Für Beschattungssysteme kann das Teil ein Gehäuse eines Beschattungssystems, insbesondere für einen Rollladen oder eine Jalousie, ein Strom- und/oder ein Datenkabel sein. Die plattenförmigen Bauteile werden nach der Montage mit der weiteren Komponente entweder direkt an die jeweilige Bearbeitungsvorrichtung der Hauptfertigungslinie oder in das Modullager gefördert. Das Modullager ist über eine Modulfördereinheit mit der Montageeinheit verbunden. Das Modullager weist hierzu Lagerplätze für die plattenförmigen Bauteile mit den von den plattenförmigen Bauteilen abkragenden Komponenten auf. In einer bevorzugten Ausgestaltung sind die Lagerplätze als bewegbare Einheiten ausgestaltet, insbesondere als selbststeuernde bewegbare Einheiten, so dass die Lagerplätze an die Bearbeitungsvorrichtung bewegt werden können. Die Lagerplätze werden bevorzugt derart bestückt, dass für den jeweiligen Verfahrensschritt der Herstellung der Gebäudeelemente auf der Hauptfertigungslinie die hierfür benötigten plattenförmigen Bauteile mit der jeweiligen Komponente vorrätig sind.

Eine Wendestation, die derart konfiguriert ist, dass das Gebäudeelement um bevorzugt annäherungsweise 180° derart gewendet wird, dass die Tragstruktur des Gebäudeelements auf den daran befestigten plattenförmigen Bauteilen auf einem Arbeitstisch aufliegt und der Hohlraum zwischen den Tragelementen zugänglich ist. Die Wendestation umfasst einen ersten Arbeitstisch, welcher eine Klappfunktion aufweist, und einen zweiten Arbeitstisch, welcher ebenfalls eine Klappfunktion aufweist. Die beiden Arbeitstische sind derart zueinander positioniert, dass das Gebäudeelement auf dem ersten hochgeklappten Arbeitstisch zum zweiten hochgeklappten Arbeitstisch übergeben wird, so dass die mit den plattenförmigen Bauteilen abgedeckte Seite der Tragstruktur in Abwärtsrichtung der Klappbewegung des zweiten Arbeitstisches zeigt.

Die Wendestation umfasst folgende Arbeitsschritte: Klappen des ersten Arbeitstisches, wobei ein auf dem Arbeitstisch gelagertes, zu wendendes Gebäudeelement von einer waagrechten Position in eine zumindest annäherungsweise senkrecht stehende Position gebracht wird. Klappen des zweiten Arbeitstisches, von einer waagrechten Position zu einer zumindest annäherungsweise senkrechten Position derart, dass das Gebäudeelement vom ersten zum zweiten Arbeitstisch übergeben werden kann. Übergabe des Gebäudeelements vom annäherungsweisen senkrecht stehenden ersten Arbeitstisch zum annäherungsweise senkrecht stehenden zweiten Arbeitstisch. Klappen des zweiten Arbeitstisches von der annäherungsweisen senkrecht stehenden Position in eine waagerechte Position.

Eine Füllstation, die derart konfiguriert ist, dass der Hohlraum zwischen den Tragelementen des Gebäudeelements mit einem Füllmaterial befüllt wird. In einer bevorzugten Ausgestaltung weist das Gebäudeelement eine Vielzahl von Hohlräumen zwischen den Tragelementen auf, welche jeweils durch ein Tragelement voneinander getrennt sind. Die Füllstation weist eine Füllvorrichtung oder einen Roboter, auf, um ein Füllmaterial, und vorzugsweise ein Strukturbauteil, im Hohlraum des Gebäudeelements einzubringen. In einigen Ausführungsformen kann eine Vielzahl von Füllvorrichtungen bereitgestellt werden, wobei die Füllvorrichtung derart konfiguriert sind, dass sie eine geeignete Menge eines Füllmaterials innerhalb des Hohlraums oder der Hohlräume einbringen und verteilen kann. Angrenzend an die Füllvorrichtung kann eine Klinge vorgesehen sein, mit der das Füllmaterials derart im Hohlraum verteilt wird, dass die Oberfläche des Füllmaterials im wesentlichen koplanar mit der Oberfläche der Tragelemente ist, und/oder überschüssiges Füllmaterial von der Oberfläche entfernt wird. Das Füllmaterial umfasst vorzugsweise ein schüttbares, einblasbares und/oder einlegbares Material, mit dem der Hohlraum auszufüllen ist, insbesondere gänzlich auszufüllen. Für schüttbares Material wird vorzugsweise ein inertes Schüttgut insbesondere Kunststoffe und/oder auf natürlicher Basis hergestellte schüttbare Materialien wie Split und/oder Perlite verstanden. Ein bevorzugtes einblasbares Material umfasst einen Schaum, insbesondere ein Kunststoffschaum, welcher je nach Schaumart eine nachgeschaltete Aushärtestation und/oder eine Trocknungsstation aufweist. Schäume können besonders vorteilhaft den Hohlraum auf einfache Weise vollständig ausfüllen. Zudem weisen Schäume einen hohen Gehalt an Lufteinschlüssen auf, womit ein guter Schall-, Wärme- und/oder Kälteschutz erzielt wird. Einlegbare Materialien umfassen vorzugsweise Materialien in Mattenform, aufweisend ein faserhaltiges oder geschäumtes Material. Das mattenförmige Material wird in einer vierten Vorfertigungseinrichtung der Füllstation derart bearbeitet, dass eine oder eine Vielzahl von Matten den Hohlraum zumindest teilweise, insbesondere gänzlich ausfüllen.

In einer bevorzugten Ausgestaltung wird vor dem Einbringen des Füllmaterials ein Strukturbauteil eingebracht. Das Strukturbauteil weist eine dreidimensionale Struktur insbesondere eine Struktur mit in der Draufsicht insbesondere eine Gitter-, eine Rechteck-, eine Rauten-, eine Kreisförmige- und/oder eine Wabenstruktur aus Stegen und/oder Streben auf, welche in einer bevorzugten Ausgestaltung Kammern bilden, in welche das Füllmaterial eingebracht wird. Das Strukturbauteil dient zur Verteilung des Füllmaterials und hält das Füllmaterial zumindest annäherungsweise in Position. Das Strukturbauteil wird im Hohlraum eingelegt und bei Bedarf befestigt. Bei einer bewegbaren Einlegung des Strukturbauteils in den Hohlraum wird das Strukturbauteil durch das Einbringen des Füllmaterials im Hohlraum zumindest annähernd in Position gehalten, indem das Füllmaterial um das Strukturbauteil und zwischen den Tragelementen verteilt wird. Alternativ kann das Strukturbauteil an den Tragelementen als auch an den dem Strukturbauteil zugewandten plattenförmigen Bauteilen befestigt werden. Die Befestigung umfasst vorzugsweise eine reibschlüssige und formschlüssige Befestigung, insbesondere eine Klemmung des Bauteils oder eine Verschraubung, Vernietung und/oder Verklippung.

Der Füllstation ist eine vierte Vorfertigungseinrichtung zugeordnet. In der vierten Vorfertigungseinrichtung wird ein mattenförmiges Füllmaterial und/oder ein einlegbares Strukturbauteil bearbeitet. Die vierte Vorfertigungseinrichtung weist einen Arbeitstisch mit einer Bearbeitungsvorrichtung, eine Hebevorrichtung und einen Bereich, in dem Abfälle aus der Bearbeitung der plattenförmigen Bauteile gesammelt werden, auf. In einer bevorzugten Ausgestaltung kann die Bearbeitungsvorrichtung eine Schneid- und/oder Sägevorrichtung sein. Die Hebevorrichtung weist vorzugsweise einen Roboter auf, um die Position der plattenförmigen Bauteile zu ändern. Die bearbeiteten mattenförmigen Füllmaterialien und/oder die Strukturbauteile werden über eine Fördereinheit der Bearbeitungsvorrichtung der Füllstation der Hauptfertigungslinie zugeführt.

Eine weitere Abdeckstation, die dazu konfiguriert ist, eine Vielzahl von plattenförmigen Bauteilen, welche der Station über eine Transportvorrichtung und/oder einen Lagerbereich bereitgestellt werden, über eine Außenfläche der Tragstruktur zu positionieren, insbesondere derart zu positionieren, dass die Platten zumindest annäherungsweise in einem Maß dem Maß der Tragstruktur entspricht oder in einem vorbestimmten Muster platziert und den, insbesondere befüllten, Hohlraum abdeckt. Die Abdeckstation ist weiterhin derart konfiguriert, die plattenförmigen Bauteile mit einer Vielzahl von Befestigungselementen an der Tragstruktur zumindest vorübergehend zu befestigen, wobei die Befestigungselemente derart positioniert sind, dass diese in die Tragstruktur eingreifen. In einer bevorzugten Ausführungsform ist die Abdeckstation derart konfiguriert, dass eine weitere Lage an plattenförmigen Bauteilen auf eine bereits befestigte Lage an plattenförmigen Bauteilen positioniert und abgelegt werden. Die plattenförmigen Bauteile sind dabei derart vorkonfektioniert, dass diese zumindest annäherungsweise die gleichen Abmessungen wie die plattenförmigen Bauteile der ersten Lage aufweisen. In einer besonders bevorzugten Ausführung weisen die plattenförmigen Bauteile der zweiten Lage Abmessungen auf, welche von den plattenförmigen Bauteilen der ersten Lage abweichen. In einer weiteren alternativen Ausführung werden die plattenförmigen Bauteile der zweiten Lage in einer anderen Position zur ersten Lage abgelegt und befestigt. Dadurch ist es möglich, die Kontaktbereiche der plattenförmigen Bauteile der ersten Lage durch die plattenförmigen Bauteile der zweiten Lage zu überdecken. Dies führt zu einer steiferen Ausgestaltung des Gebäudeelements.

In einer weiteren bevorzugten Ausgestaltung können noch weitere Lagen von plattenförmigen Bauteilen vorgesehen sein. Insbesondere können die plattenförmigen Bauteile der ersten, der zweiten und der weiteren Lage aus dem gleichen oder aus unterschiedlichen Werkstoffen bestehen. Die Befestigung der zweiten und weiteren Lagen an der Tragstruktur ist derart ausgestaltet, dass die Befestigungselemente der zweiten Lage durch die erste Lage in die Tragstruktur eingreifen sowie das die Befestigungselemente der zweiten Lage zu den Befestigungselemente der ersten Lage beabstandet sind. Die Art der Befestigung der weiteren Lagen ist analog der Befestigung der zweiten Lage.

In einem bevorzugten weiteren Verfahrensschritt wird ein Gebäudeelement in einer Trennstation in mehrere Teile geteilt, die jeweils als eigenständiges Gebäudeelement verwendbar sind, wobei sich zumindest ein oberes und ein unteres Trageelement über die gesamte Länge des ungetrennten Gebäudeelements erstrecken. In einer besonders bevorzugten Ausführungsform wird das Gebäudeelement mit einem spanabhebenden Bearbeitungsvorrichtung an einer vordefinierten und markierten Trennstelle geteilt. Vorzugsweise weist der Bereich der Trennstelle zumindest bereichsweise keine plattenförmigen Bauteile auf. Die spanabhebende Bearbeitungsvorrichtung umfasst vorzugsweise eine Fräs-, Säge- und/oder eine Schneidvorrichtung, insbesondere eine vollautomatisierte Säge- und/oder Schneidvorrichtung. Vorzugsweise wird das Gebäudeelement in eine Vielzahl gelichartiger und/oder zusammengehöriger Gebäudeelementen aufgeteilt.

Die zu erzeugenden Gebäudeelemente sind in der maximalen Größe annäherungsweise auf die Arbeitstischgröße der einzelnen Stationen limitiert, womit der kürzeste Arbeitstisch der Hauptfertigungslinie zumindest annäherungsweise die maximale Länge eines Gebäudeelements definiert. Die Maße der für die Baustelle benötigten Gebäudeelemente werden durch die geplante Gebäudekonstruktion bestimmt, womit in der Regel eine Vielzahl von Gebäudeelementen mit geringeren Längen als der maximal möglichen Länge hergestellt werden. Somit ist es möglich mehrere kürzere Gebäudeelemente zeitgleich auf einem Arbeitstisch herzustellen. Die Ermittlung der zeitgleich auf einem Arbeitstisch zu erzeugenden Gebäudeelemente kann manuell und/oder mit Hilfe eines Computerprogramms, insbesondere mit Hilfe einer Simulation, erfolgen. Durch die Herstellung mehrerer Gebäudeelemente auf einem Arbeitstisch in einem Arbeitsvorgang ist es möglich, die Arbeitstischlänge bestmöglich auszunutzen. Damit ist es möglich, eine besonders flexible Hauptfertigungslinie mit einer hohen Auslastung bereitzustellen.

In einem weiteren bevorzugten Verfahrensschritt wird das Gebäudeelement mit Hilfe einer Aufstellvorrichtung senkrecht aufgestellt und an eine weitere Bearbeitungsstation befördert. In der weiteren Bearbeitungsstation wird eine weitere Lage, vorzugsweise eine wetterbeständige Lage, an das Gebäudeelement angebracht. Die Bearbeitungsstation weist mehrere Arbeitsbereiche, insbesondere zwei übereinander liegende Arbeitsbereiche auf, um am Gebäudeelement auf zumindest einer Seite eine weitere Lage anzuordnen, insbesondere daran zu befestigen. Die weitere Lage umfasst in einer bevorzugten Ausführung einen wasserabweisenden Putz, eine Holzverschalung mit einer Vielzahl von Holzlatten und/oder ein Verblendersystem aufweisend eine Vielzahl von einzelnen Verblenderplatten. Das Anbringen der weiteren Lage kann manuell, teilmanuell oder vollautomatisiert, insbesondere durch einen Roboter, erfolgen. Nachfolgend wird das Gebäudeelement zu einer weiteren Bearbeitungsstation und/oder ein Lager befördert.

Als letzte Station der Hauptfertigungslinie ist ein Gebäudeelementlager vorgesehen. Das Gebäudeelementlager ist über eine Fördereinheit mit der vorherigen Station derart verbunden, dass die Fördereinheit die Gebäudeelemente von der vorherigen Station zum Gebäudeelementlager befördern. Das Gebäudeelementlager wird derart mit den erzeugten Gebäudeelementen bestückt, dass die Beladung einer Transporteinheit, insbesondere eines Nutzfahrzeugs, welches die Gebäudeelemente an einen Bauplatz zur Montage eines Gebäudes befördert, in der Reihenfolge erfolgt, in der die Gebäudeelemente auf der Baustelle aufgebaut werden. Insbesondere werden im Gebäudeelementlager die einzelnen Etagen eines Gebäudes in einem Bereich zusammengefasst und bis zum Transport zur Baustelle gelagert.

Der Fertigungsanlage umfasst eine zweite Vorfertigungslinie zur Bearbeitung von plattenförmigen Bauteilen. Die zweite Vorfertigungslinie umfasst ein erstes Lager von plattenförmigen Bauteilen, eine Plattenaufteilvorrichtung zur Bearbeitung der plattenförmigen Bauteile und ein zweites Lager zur zumindest vorübergehenden Lagerung der bearbeiteten plattenförmigen Bauteile, wobei das erste Lager und das zweite Lager derart positioniert und insbesondere gestaltet sind, dass diese von jeweils drei Seiten mit einer Fördervorrichtung anfahrbar ist. Die zweite Vorfertigungslinie weist zwischen dem ersten Lager und der Plattenaufteilvorrichtung eine erste Fördervorrichtung und zwischen der Plattenaufteilvorrichtung und dem zweiten Lager eine weitere Fördervorrichtung auf. Die Plattenaufteilvorrichtung umfasst eine spanabhebende Bearbeitungsvorrichtung, insbesondere eine Fräs-, eine Säge- und/oder eine Schneidvorrichtung, zur Bearbeitung von plattenförmigen Bauteilen. Das zweite Lager weist einen Roboter zum Sortieren und Lagern der bearbeiteten plattenförmigen Bauteile auf. Die Lagerung im zweiten Lager erfolgt derart, dass die bearbeiteten plattenförmigen Bauteile sowohl nach Material, nach Größe und/oder nach einer individuell in die plattenförmigen Bauteile eingebrachten Aussparung vorgenommen wird. In einer bevorzugten Ausgestaltung kann auf der Plattenaufteilvorrichtung der zweiten Vorfertigungslinie ein plattenförmiges Bauteil bearbeitet werden, während zeitgleich auf einer Station der Hauptfertigungslinie ein Gebäudeelement bearbeitet wird, wobei das in der zweiten Vorfertigungslinie bearbeitete plattenförmige Bauteil der Abdeckstation oder der weiteren Abdeckstation der Hauptfertigungslinie zugeführt wird.

Erste, zweite, dritte und vierte Vorfertigungseinrichtung werden vorliegend als erste Vorfertigungslinie zusammengefasst.

Weitere wichtige Merkmale und Vorteile der Erfindung ergeben sich aus den Unteransprüchen, aus den Zeichnungen und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können verschiedene Kombinationen oder Wiederholungen einzelner Stationen der Hauptfertigungslinie sowie der Vorfertigungslinien verwendet werden.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils:

Fig. 1 eine schematische Skizze der Hauptfertigungslinie einer erfindungsgemäßen Fertigungsanlage,

Fig. 2 eine schematische Skizze der Fertigungsanlage mit einer Hauptfertigungslinie und dazugehörigen Vorfertigungseinrichtungen (oder -linien),

Fig.3 eine schematische Skizze eines Gebäudeelements umfassend ein Strukturbauteil,

Fig.4 eine schematische Skizze eines Gebäudeelements umfassend eine zusätzliche Komponente,

Fig.5 eine schematische Skizze eines Gebäudeelements umfassend eine alternative zusätzliche Komponente und

Fig.6 eine schematische Skizze eines Gebäudeelements aufweisend eine Aussparung.

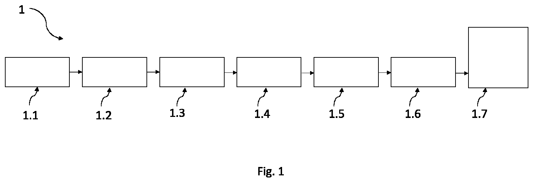

In Fig. 1 wird in schematischer Darstellungsform eine Ausführungsform einer Fertigungsanlage zur Herstellung von mehrteiligen Gebäudeelementen 5 gezeigt. Die Fertigungsanlage umfasst eine Hauptfertigungslinie 1 und kann mehrere Vorfertigungslinien 2,3 umfassen. Die Hauptfertigungslinie 1 weist eine Vielzahl an Fertigungsstationen auf. Die einzelnen Fertigungsstationen sind in der Logik der Herstellungsschritte hintereinander in einer Reihe angeordnet. Eine Anordnung in einer Reihe führt zu einer effizienten Hauptfertigungslinie 1, da unnötige Transportwege eines herzustellenden Gebäudeelements 5 vermieden werden können. Zwischen den einzelnen Stationen sind Fördereinheiten, insbesondere Übergabeeinheiten, vorgesehen. In einer alternativen Ausgestaltung sind die einzelnen Stationen derart zueinander angeordnet, dass ein herzustellendes Gebäudeelement 5 von einer Station direkt zu einer weiteren Station übergeben werden kann, wobei das herzustellende Gebäudeelement 5 eine größere Längenerstreckung als der größte Abstand zwischen zwei Fertigungsstationen aufweist. Die Fertigungsstationen der Fertigungsanlage umfassen eine Tragrahmenstation 1.1, eine Abdeckstation 1.2, eine Modulintegrationsstation 1.3, eine Wendestation 1.4, eine Füllstation 1.5, eine weitere Abdeckstation 1.6 und ein Lager 1.7.

Die Tragstrukturstation 1.1 weist einen Arbeitstisch, eine Zuführeinheit für die Tragelemente 6.1, 6.2, 6.3, einen Portalkran, einen Roboter, eine Vorrichtung zum Positionieren der Tragelemente und eine Befestigungsvorrichtung zum Befestigen der Tragelemente aneinander auf. Die Trageelemente 6.1, 6.2, 6.3 werden von der Zuführeinheit und/oder dem Protalkran derart auf den Arbeitstisch befördert und/oder abgelegt, dass eine Tragstruktur 6 für das Gebäudeelement 5 entsteht. Insbesondere wird die Tragstruktur 6 derart erzeugt, dass ein oberes Tragelement 6.1a und ein unteres Tragelement 6.1b auf dem Arbeitstisch abgelegt werden, wobei das obere Tragelement 6.1a und das untere Tragelement 6.1b die Ober- und Unterkante des zu erzeugenden Gebäudeelements 5 definieren. Zwischen dem oberen und unteren Tragelement werden weitere Tragelemente 6.2, 6.3 auf dem Arbeitstisch derart angeordnet, dass eine Tragstruktur 6 für das Gebäudeelement 5 gebildet wird, wobei die Tragstruktur 6, insbesondere eine oder mehrere Aussparungen 7 aufweist. Die Aussparungen 7 sind derart gestaltet, dass im Gebäudeelement 5 Fenster, Türen oder dergleichen eingebaut werden können. Die Tragelemente 6.1, 6.2, 6.3 können mit einer Positioniervorrichtung zueinander ausgerichtet werden. Sie werden mit einer Bearbeitungsvorrichtung derart aneinander befestigt, dass eine Tragstruktur 6 entsteht. Nachfolgend wird die Tragstruktur 6 aus der Tragstrukturstation 1.1 an eine nachfolgende Station, insbesondere zur Abdeckstation 1.2 befördert.

Die Abdeckstation 1.2 weist einen Arbeitstisch, einen Vorratsbereich zur Lagerung der für den Arbeitsschritt benötigten plattenförmigen Bauteile 6.6, einen Roboter und eine Befestigungsvorrichtung auf. Der Roboter positioniert die plattenförmigen Bauteile 6.6 derart, dass die Tragstruktur 6 mit den plattenförmigen Bauteilen 6.6 zumindest teilweise bedeckt ist. Nach dem Ablegen der plattenförmigen Bauteile 6.6 auf der Tragstruktur 6, werden mit Hilfe der Vorrichtung die plattenförmigen Bauteile 6.6 an den Tragelementen 6.1, 6.2, 6.3 befestigt. Die Befestigungselemente umfassen Nägel, Schrauben, Drahtklammern und/oder vergleichbare Befestigungselemente. In einer bevorzugten Ausgestaltung wird nach der Befestigung einer ersten Lage an plattenförmigen Bauteilen 6.6 mit Hilfe des Roboters eine weitere Lage an plattenförmigen Bauteilen 6.6 auf die erste Lage an plattenförmigen Bauteilen 6.6 abgelegt. Nachfolgend werden die plattenförmigen Bauteile 6.6 der zweiten und weiteren Lage mittels der Befestigungsvorrichtung derart an den Tragelementen 6.1, 6.2, 6.3 befestigt, dass die Befestigungselemente der ersten Lage der plattenförmigen Bauteile 6.6 beabstandet zu den Befestigungselementen der weiteren Lage sind. Nachfolgend wird das Gebäudeelement 5 von der Abdeckstation 1.2 an eine nachfolgende Station, insbesondere an die Modulintegrationsstation 1.3 befördert.

Die Modulintegrationsstation 1.3 weist einen Arbeitstisch, einen Vorratsbereich, eine spanabhebende Vorrichtung, insbesondere eine Fräsvorrichtung, einen Roboter und eine Befestigungsvorrichtung auf. Der Vorratsbereich weist die für den Arbeitsschritt benötigenden plattenförmigen Bauteile 6.6 auf, wobei die plattenförmigen Bauteile 6.6 auf einer Vielzahl von Stapeln im Bereich des Arbeitstisches positioniert sind. Der Vorratsbereich weist sowohl standardisierte plattenförmige Bauteile 6.6 als auch plattenförmige Bauteile aufweisend eine zusätzliche (abkragende) Komponente auf. In einem Ausgestaltungsbeispiel erzeugt die spanabhebende Vorrichtung eine Aussparung, bevorzugt eine Nut, in der obersten Lage der plattenförmigen Bauteile 6.6, welche auf der Tragstruktur 6 des Gebäudeelements 5 abgelegt sind. Nachfolgend wird eine weitere Lage an plattenförmigen Bauteilen 6.6 mit Hilfe eines Roboters auf dem Gebäudeelement 5 derart abgelegt, dass eine abkragende zusätzliche Komponente 10, 11, 12, 13, 14, welche an einem der vorkonfektionierten plattenförmigen Bauteile 6.6 angeordnet ist, in die Aussparung eingreift. Nach dem Ablegen der plattenförmigen Bauteile 6.6 auf dem Gebäudeelement 5, werden mit Hilfe der Vorrichtung die einzelnen plattenförmigen Bauteile 6.6 an den Tragelementen 6.1, 6.2, 6.3 befestigt. Als Befestigungselemente können Nägel, Schrauben, Drahtklammern und/oder ein vergleichbares Befestigungselement verwendet werden. Nachfolgend wird das Gebäudeelement 5 von der Modulintegrationsstation 1.3 an eine nachfolgende Station, insbesondere an die Wendestation 1.4 befördert.

Die Wendestation 1.4, die derart konfiguriert ist, dass das Gebäudeelement 5 um zumindest annäherungsweise 180° derart gewendet wird, dass die Tragstruktur 6 des Gebäudeelements 5 auf den daran befestigten plattenförmigen Bauteilen 6.6 auf einem Arbeitstisch aufliegt, um den Raum 8 zwischen den Tragelementen 6.1, 6.2, 6.3 zugänglich zu machen. Die Wendestation 1.4 umfasst einen ersten Arbeitstisch, welcher eine Klappfunktion aufweist, und einen zweiten Arbeitstisch, welcher ebenfalls eine Klappfunktion aufweist. Die beiden Arbeitstische sind derart zueinander positioniert, dass das Gebäudeelement 5 auf dem ersten hochgeklappten Arbeitstisch zum zweiten hochgeklappten Arbeitstisch übergeben wird, so dass die mit den plattenförmigen Bauteilen 6.6 abgedeckte Seite der Tragstruktur 6 in Abwärtsrichtung der Klappbewegung des zweiten Arbeitstisches zeigt.

Die Wendestation 1.4 umfasst folgende Arbeitsschritte: Klappen des ersten Arbeitstisches, aufweisend das zu wendende Gebäudeelement 5, von einer waagrechten Position zu einer zumindest annäherungsweise senkrecht stehenden Position. Klappen des zweiten Arbeitstisches, von einer waagrechten Position zu einer zumindest annäherungsweise senkrecht stehenden Position derart, dass das Gebäudeelement 5 vom ersten zum zweiten Arbeitstisch übergeben werden kann. Übergabe des Gebäudeelements 5 vom ersten Arbeitstisch zum zweiten Arbeitstisch. Klappen des zweiten Arbeitstisches von der annäherungsweisen senkrechten stehenden Position zu einer waagrechten Position. Nachfolgend wird das Gebäudeelement 5 von der Wendestation 1.4 an eine nachfolgende Station, insbesondere an die Füllstation 1.5 befördert.

Die Füllstation 1.5 weist einen Arbeitstisch, zumindest eine Füllvorrichtung und/oder einen Roboter zur Befüllung auf. Die Füllvorrichtung weist eine Zuführung des Füllmaterial aus einem Füllmateriallager auf. Bei der Verwendung einer Vielzahl an Füllmaterialien weist die Füllvorrichtung eine Vielzahl von Füllmaterialienlagern, auf. Das Füllmaterial umfasst ein schüttbares, einblasbares und/oder einlegbares Material, um den Raum 8 auszufüllen. Bei einem schüttbaren Füllmaterial umfasst das Füllmateriallager ein Silo. Die Zuführung des Füllmaterials erfolgt über einen Schüttgutförderer, insbesondere einen Gurtförderer. Bei einem einblasbaren Füllmaterial umfasst die Zuführung eine Luftfördervorrichtung, insbesondere eine Turbine, welche einen Luftstrom erzeugt, und ein Rohrleitungssystem, insbesondere ein zumindest teilweise flexibel bewegbares Rohrleitungssystem. Bei einem einlegbaren Füllmaterial umfasst die Zuführung einen Roboter aufweisend einen Arm zum Greifen des einlegbaren Füllmaterials von einem Lagersystem. In einer besonderen Ausgestaltung kann die Füllvorrichtung eine Klinge aufweisen, um die Oberfläche des Füllmaterials zu vergleichmäßigen und überschüssiges Füllmaterial zu entfernen.

In einer bevorzugten Ausgestaltung wird vor dem Befüllen ein Strukturbauteil 9 in den Raum 8 eingelegt. Das Strukturbauteil 9 kann lose in den Raum 8 auf das plattenförmige Bauteil 6.6 gelegt werden oder mit dem plattenförmigen Bauteil 6.6 und/oder den Tragelementen 6.1, 6.2, 6.3 befestigt werden. Wenn das Strukturbauteil 9 an den plattenförmigen Bauteilen 6.6 und/oder den Tragelementen 6.1, 6.2, 6.3 befestigt ist, versteift es das Gebäudeelement 5 zusätzlich. Insbesondere bei hoch belasteten Gebäudeelementen 5 kann eine solche zusätzliche Versteifung notwendig sein, um die auf das Gebäudeelement 5 wirkenden Kräfte gleichmäßig zu verteilen und weiterzuleiten.

Das Strukturbauteil 9 dient des Weiteren zu einer verbesserten Verteilung des Füllmaterials innerhalb des Raums 8 bzw. teilt den Raum 8 in zwei oder mehrere Räume auf. In einer besonders bevorzugten Ausgestaltung weist das Strukturbauteil 9 eine dreidimensionale Struktur mit mehreren Streben und/oder Stegen, insbesondere in einer Draufsicht in der Form von einer Vielzahl von Kreisen, Rechtecken und/oder Waben, auf, womit der Raum 8 in eine Vielzahl von Kammern unterteilt wird. In Untersuchungen hat sich gezeigt, dass insbesondere schüttbares Füllmaterial besonders gleichmäßig über die Kammern des Strukturbauteils 9 verteilt werden können. Das in den Kammern befindliche Füllmaterial wird über die Kammerwände zumindest annähernd in Position gehalten, womit eine Verschiebung des Massemittelpunkts des Gebäudeelements 5 verringert bzw. vermieden wird.

Die Füllstation 1.5 ist derart konfiguriert, dass der Raum 8 zwischen den Tragelementen 6.1, 6.2, 6.3 des Gebäudeelements 5 mit einem Füllmaterial befüllt wird. In einer bevorzugten Ausgestaltung weist das Gebäudeelement 5 eine Vielzahl von Räumen 8 zwischen den Tragelementen 6.1, 6.2, 6.3 auf, welche jeweils durch ein Tragelement 6.1, 6.2, 6.3 voneinander getrennt sind. Die Füllvorrichtung ist derart konfiguriert, dass sie eine geeignete Menge eines Füllmaterials innerhalb des Raums 8 oder der Räume 8 verteilt und insbesondere über die Klinge das Füllmaterial in den Räumen 8 vergleichmäßigt und überschüssiges Material entfernt. Nachfolgend wird das Gebäudeelement 5 von der Füllstation 1.5 an eine nachfolgende Station, insbesondere an die weitere Abdeckstation 1.6 befördert.

Die weitere Abdeckstation 1.6 weist einen Arbeitstisch, einen Vorratsbereich, zur Lagerung der für den Arbeitsschritt benötigten plattenförmigen Bauteile 6.6, einen Roboter und eine Befestigungsvorrichtung auf. Die Tragstruktur 6 wird durch einen Roboter mit plattenförmigen Bauteilen 6.6, welche über den Vorratsbereich zur Verfügung gestellt werden, bedeckt. Der Roboter positioniert die plattenförmigen Bauteile 6.6 derart, dass die mit Füllmaterial befüllten Räume 8 der Tragstruktur 6 bedeckt sind. Nach dem Ablegen der plattenförmigen Bauteile 6.6 auf der Tragstruktur 6, werden mit Hilfe der Befestigungsvorrichtung die plattenförmigen Bauteile 6.6 an den Tragelementen 6.1,6.2,6.3 befestigt. Die Befestigungselemente umfassen Nägel, Schrauben, Drahtklammern, Klebstoffe und/oder ein vergleichbares Befestigungselement. In einer bevorzugten Ausgestaltung wird nach der Befestigung der ersten Lage an plattenförmigen Bauteilen 6.6 mit Hilfe des Roboters eine weitere Lage an plattenförmigen Bauteilen 6.6 auf die erste Lage an plattenförmigen Bauteilen 6.6 abgelegt. Nachfolgend werden die plattenförmigen Bauteile 6.6 der zweiten Lage mittels der Befestigungsvorrichtung derart an den Tragelementen 6.1,6.2,6.3 befestigt, dass die Befestigungselemente der ersten Lage der plattenförmigen Bauteile 6.6 beabstandet zu den Befestigungselementen der zweiten Lage sind. Nachfolgend wird das Gebäudeelement 5 von der weiteren Abdeckstation 1.6 an eine nachfolgende Station, insbesondere in das Gebäudeelementelager 1.7 befördert.

Das Gebäudeelementelager 1.7 weist eine Fördereinheit, eine Lagerfläche, umfassend mehrere Lagerplätze für die Gebäudeelemente 5 und eine weitere Fördereinheit, insbesondere eine Deckenkraneinheit auf. Die Fördereinheit ist mit der vorherigen Station derart verbunden, dass die Fördereinheit die Gebäudeelemente 5 von der vorherigen Station zum Lager befördert, insbesondere selbststeuernd befördert. Die Lagerfläche wird derart mit den erzeugten Gebäudeelementen 5 bestückt, dass die Beladung einer Transporteinheit, insbesondere eines Nutzfahrzeugs, welches die Gebäudeelemente 5 an einen Bauplatz zur Montage eines Gebäudes befördert, in der Reihenfolge erfolgt, in der auf der Baustelle die Gebäudeelemente 5 aufgebauten werden. Die Beladung der Transporteinheit erfolgt über die weitere Fördereinheit, insbesondere über einen Deckenkran.

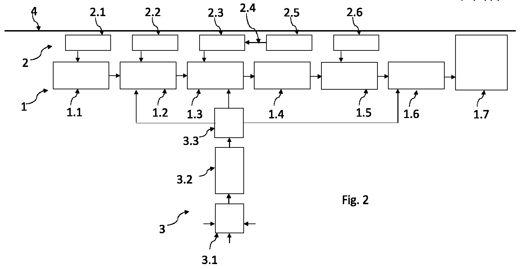

Fig. 2 zeigt in schematischer Darstellung eine Ausführungsform der erfindungsgemäßen Fertigungsanlage mit einer Hauptfertigungslinie 1 und einer Auswahl an Vorfertigungseinrichtungen, die gemeinsam eine erste Vorfertigungslinie 2 bilden, in Bezug zu einer tragenden Struktur einer Werkshalle 4 sowie einer zweiten Vorfertigungslinie 3.

Die erste Vorfertigungslinie 2 weist eine Montageeinheit (2.3c) zur Bearbeitung plattenförmiger Bauteile (6.6) und eine Fördereinheit zur Zuführung der bearbeiteten plattenförmigen Bauteile (6.6) an die Hauptfertigungslinie (1) auf. In einer bevorzugten Ausführungsform weist die erste Vorfertigungslinie 2 ein Modullager (2.3a) auf. Dieses wird in umgekehrter Reihenfolge zur Entnahme für einen nachgelagerten Bearbeitungsschritt bedient. Vorzugsweise umfasst die Montageeinheit (2.3c) eine spanabhebende Bearbeitungsvorrichtung, insbesondere eine Fräs-, Säge- und/oder Schneidvorrichtung, zur Anpassung der Maße oder zur Erzeugung von Ausnehmungen in einem plattenförmigen Bauteil (6.6). Ferner kann die Montageeinheit (2.3c) eine Bearbeitungsvorrichtung zur Befestigung einer Komponente an einem plattenförmigen Bauteil umfassen. Die Komponenten kann ein Teil eines Beschattungssystems umfassen. Vorzugsweise umfasst das Teil des Beschattungssystems ein Gehäuse für einen Rollladen oder eine Jalousie, ein Strom- und/oder ein Datenkabel zur Versorgung und/oder Ansteuerung des Beschattungssystems..

Die erste Vorfertigungslinie 2 ist parallel zur Hauptfertigungslinie 1 und zwischen der Hauptfertigungslinie 1 und einer tragenden Struktur einer Werkshalle 4 angeordnet. Die erste Vorfertigungslinie 2 umfasst eine erste Vorfertigungseinrichtung 2.1, welche der Tragstrukturstation 1.1 zugeordnet ist, eine zweite Vorfertigungseinrichtung 2.2, welche der Abdeckstation 1.2 zugeordnet ist, eine dritte Vorfertigungseinrichtung 2.3, welche der Modulintegrationsstation 1.3 zugeordnet ist und eine vierte Vorfertigungseinrichtung 2.4, welche der Füllstation 1.5 der Hauptfertigungslinie 1zugeordnet ist.

Die erste Vorfertigungseinrichtung 2.1 dient zur Bearbeitung von Tragelementen 6.1, 6.2, 6.3, um diese für eine weitere Bearbeitung an der Tragstrukturstation vorzubereiten. Die erste Vorfertigungseinrichtung 2.1 weist einen Arbeitstisch, eine spanabhebende Bearbeitungsvorrichtung, insbesondere eine Säge-, Fräs- und/oder Schneidvorrichtung, und eine Fördereinheit zur Beförderung von bearbeiteten Tragelemente 6.1, 6.2, 6.3 zur Tragstrukturstation 1.1 der Hauptfertigungslinie 1 auf. Die Tragelemente 6.1, 6.2, 6.3 werden auf dem Arbeitstisch der ersten Vorfertigungseinrichtung 2.1 positioniert und auf die entsprechende Länge der auf der Hauptfertigungslinie 1 herzustellenden Tragstruktur 6 gekürzt. In einer bevorzugten Ausführungsform werden die Tragelemente 6.1, 6.2, 6.3 mit einer weiteren spanabhebenden Bearbeitungsvorrichtung, insbesondere einer Hobelvorrichtung, derart bearbeitet, dass zumindest eines der beiden weiteren Maße der Tragelemente 6.1, 6.2, 6.3, insbesondere der Höhe und/oder der Breite, an das entsprechende Maß der weiteren Tragelementen 6.1, 6.2, 6.3 der herzustellenden Tragstruktur 6 angepasst werden. Besonders bevorzugt weist die erste Vorfertigungseinrichtung 2.1 eine weitere spanabhebende Bearbeitungsvorrichtung, insbesondere eine Fräsvorrichtung, auf, um Aufnahmen, insbesondere Nuten und/oder Zapfen, an den Tragelementen 6.1, 6.2, 6.3 zu erzeugen. Mit Hilfe der erzeugten Aufnahmen können in der Tragstrukturstation 1.1 der Hauptfertigungslinie 1 die Tragelemente 6.1, 6.2, 6.3 auf einfache Weise aneinandergefügt werden, um die Tragstruktur 6 bereitzustellen. Durch das Bereitstellen von Tragelemente 6.1, 6.2, 6.3, welche Nuten und Zapfen aufweisen, ist ein Zusammenbau der Tragstruktur besonders einfach möglich, da die einzelnen Verbindungsstellen 6.4 durch die Nuten und Zapfen an den Tragelementen 6.1, 6.2, 6.3 vordefiniert sind. Nachgelagert werden die bearbeiteten Tragelemente 6.1, 6.2, 6.3 mit Hilfe der Fördereinheit zur Tragstrukturstation 1.1 der Hauptfertigungslinie 1 für die weitere Bearbeitung befördert.

Die zweite Vorfertigungseinrichtung 2.2 dient zur Bearbeitung von plattenförmigen Bauteilen 6.6, um diese für eine weitere Bearbeitung an der Abdeckstation 1.2 der Hauptfertigungslinie 1 vorzubereiten. Die zweite Vorfertigungseinrichtung 2.2 weist einen Arbeitstisch, eine Bearbeitungsvorrichtung, insbesondere eine spanabhebende Bearbeitungsvorrichtung für plattenförmige Bauteile 6.6 auf. Die Bearbeitungsvorrichtung ist vorzugsweise eine Schneid-, Fräs- oder Sägevorrichtung. In der zweiten Vorfertigungseinrichtung 2.2 werden die plattenförmigen Bauteile 6.6 derart konfektioniert, dass notwendige Aussparungen 7 und Bohrungen sowie Vorbohrungen bereits vor der Positionierung der plattenförmigen Bauteile 6.6 auf die Tragstruktur 6 in die plattenförmigen Bauteile 6.6 eingebracht werden. Hierdurch ist es mögliche eine Vielzahl von Gestaltungsvarianten der Gebäudeelemente 5 auf einer Hauptfertigungslinie 1 vorzusehen.

Die dritte Vorfertigungseinrichtung 2.3 umfasst eine Montageeinheit 2.3c, eine Modulfördereinheit 2.3b und ein Modullager 2.3a. Die Montageeinheit 2.3c weist einen Arbeitstisch, insbesondere einen Drehtisch, eine spanabhebende Bearbeitungsvorrichtung, insbesondere eine Schneid-, Fräs- oder Sägeeinheit, eine Hebevorrichtung, insbesondere ein Roboter, um die Position der plattenförmigen Bauteile 6.6 zu ändern, eine Befestigungsvorrichtung, um weitere Komponenten 10,11,12,13,14 an den plattenförmigen Bauteilen 6.6 zu befestigen, und einen Bereich, um Abfälle aus der Bearbeitung der plattenförmigen Bauteile 6.6 zu sammeln, auf. Die plattenförmigen Bauteile 6.6 werden in der Montageeinheit 2.3c auf die für die weitere Bearbeitung in der Modulintegrationsstation 1.3 der Hauptfertigungslinie 1 benötigten Maße konfektioniert. Nachfolgend wird eine weitere Komponente 10,11,12,13,14, welche ein Teil eines Beschattungssystems sein kann, am plattenförmigen Bauteil befestigt. Die Befestigung kann anhand einer Verschraubung, Verklemmung, Tackerung, Verklebung oder mit Hilfe eines weiteren Bauteils erfolgen. Nachfolgend wird über die Modulfördereinheit 2.3b das bearbeitete plattenförmige Bauteil 6.6 in das Modullager 2.3a oder direkt zur Modulintegrationsstation 1.3 der Hauptfertigungslinie 1 befördert.

In der vierte Vorfertigungseinrichtung 2.4 wird ein mattenförmiges Füllmaterial und/oder ein einlegbares Strukturbauteil 9 bearbeitet. Die vierte Vorfertigungseinrichtung 2.4 weist einen Arbeitstisch mit einer Bearbeitungsvorrichtung, insbesondere einer Schneid- und/oder einer Sägevorrichtung, eine Hebevorrichtung, insbesondere ein Roboter, um die Position der plattenförmigen Bauteile 6.6 zu ändern und einen Bereich, um Abfälle aus der Bearbeitung der plattenförmigen Bauteile 6.6 zu sammeln, auf. Die bearbeiteten mattenförmigen Füllmaterialien und/oder die Strukturbauteile 9 werden über eine Fördereinheit, insbesondere eine selbststeuernde Fördereinheit, der Füllstation 1.5 der Hauptfertigungslinie 1 zugeführt, insbesondere derart zugeführt, dass das auf dem Arbeitstisch der Füllstation 1.5 zu bearbeitenden Gebäudeelement 5 die entsprechenden Materialien und/oder Bauteile der vierten Vorfertigungseinrichtung 2.4 bereitgestellt werden.

Eine zweite Vorfertigungslinie 3 weist ein erstes Lager 3.1, eine Plattenaufteilvorrichtung 3.2 und ein zweites Lager 3.3 auf. Die Plattenaufteilvorrichtung 3.2 umfasst in einer Alternative eine Fräs-, eine Säge- und/oder eine Schneidvorrichtung, um die Konfektionierung der zu bearbeiteten plattenförmigen Bauteile 6.6 durchzuführen. Das erste Lager 3.1, die Plattenaufteilvorrichtung 3.2 und das zweite Lager 3.3 sind in einer Linie hintereinander angeordnet. Die zweite Vorfertigungslinie 3 ist in Bezug zur Hauptfertigungslinie 1 im nahezu rechten Winkel zu dieser angeordnet. In einer Alternative ist die zweite Vorfertigungslinie 3 zudem auf der gegenüberliegenden Seite der Hauptfertigungslinie 1 bezogen auf die erste Vorfertigungslinie (2) angeordnet. Zwischen dem zweiten Lager 3.3 der zweiten Vorfertigungslinie 3 und den Bearbeitungsvorrichtungen der Hauptfertigungslinie 1 ist eine Fördereinheit, insbesondere eine selbststeuernde Fördereinheit, vorgesehen. Hiermit wird eine besonders flexible Integration einer zweiten Vorfertigungslinie 3 möglich, da sowohl das erste Lager 3.1 von mehreren Seiten als auch das zweite Lager 3.3 von mehreren Seiten bedient werden kann, womit vom zweiten Lager 3.3 mehrere Fördereinheiten die bearbeiteten plattenförmigen Bauteile 6.6 an mehrere Bearbeitungsvorrichtungen der Hauptfertigungslinie 1, insbesondere zeitgleich, befördert werden können, insbesondere derart befördert werden können, dass die einzelnen Transportwege von der zweiten Vorfertigungslinie 3 zu den Bearbeitungsvorrichtungen der Hauptfertigungslinie 1 optimiert werden können. Somit kann eine schnelle Beförderung der plattenförmigen Bauteile 6.6 sichergestellt werden.

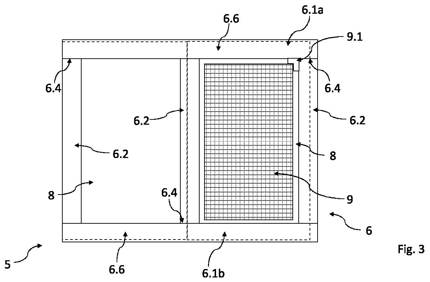

Fig. 3 zeigt eine schematische Darstellung eines Gebäudeelements 5 mit einer Tragstruktur 6. Die Tragstruktur 6 weist ein oberes Tragelement 6.1 und ein unteres Tragelement 6.1 auf. Zwischen dem oberen und unteren Tragelement 6.1 sind im nahezu rechten Winkel vertikale Tragelemente 6.2 angeordnet. Im Kontaktbereich der Tragelemente 6.1, 6.2 ist je Kontaktbereich eine Verbindungsstelle 6.4 vorgesehen. Die Verbindungsstellen 6.4 der Tragelemente 6.1, 6.2 zueinander können jeweils ein Nut-Feder-System aufweisen. Im Bereich der Verbindungsstellen 6.4 werden die Tragelemente 6.1, 6.2 aneinander positioniert und befestigt. In einer bevorzugten Ausgestaltung weist die Verbindungsstelle 6.4 eine Nut-Feder-Verbindung auf. Hiermit ist es möglich die Tragstruktur 6 einfach zusammenzubauen Zudem führt die Nut-Feder-Verbindung zu einer weiteren Versteifung der Tragstruktur 6, da die Tragelemente 6.1, 6.2 im Bereich der Verbindungsstelle 6.4 ineinander eingreifen.

Fig. 3 veranschaulicht ferner plattenförmige Bauteile 6.6. Die plattenförmigen Bauteile 6.6 sind in der Ansicht hinter den Tragelementen 6.1, 6.2 angeordnet. Die plattenförmigen Bauteile 6.6 sind derart zu den Tragelementen 6.1, 6.2 positioniert, dass ein Raum 8 zwischen den Tragelementen 6.1, 6.2 einseitig abgedeckt ist. Ferner sind die plattenförmigen Bauteile 6.6 derart positioniert, dass die plattenförmigen Bauteile 6.6 zumindest annähernd mit dem oberen und unteren Tragelement 6.1 abschließen. Die plattenförmigen Bauteile 6.6 sind derart zueinander positioniert, dass die plattenförmigen Bauteile 6.6 anhand jeweils einer Kante zueinander in Kontakt stehen bzw. zumindest aneinander angrenzen, um eine flächige Lage aus plattenförmigen Bauteilen 6.6 zu bilden. Die Kanten der plattenförmigen Bauteile 6.6 sind zumindest annähernd mittig zu einem vertikalen Tragelement 6.2 ausgerichtet, womit sichergestellt werden kann, dass die aneinander angrenzenden plattenförmigen Bauteile 6.6 an dem vertikalen Tragelement 6.2 befestigt werden können.

Des Weiteren zeigt Fig.3 ein Strukturbauteil 9, welches in den Raum 8 zwischen den Tragelementen 6.1, 6.2 auf ein plattenförmiges Bauteil 6.6 positioniert werden kann. Das Strukturbauteil 9 weist in einer Ausführungsform eine dreidimensionale Struktur zumindest in Form eines Steges oder einer Strebe auf. Der Steg oder die Strebe unterteilt den Raum 8 in zwei Räume, womit eine weitere Versteifung der Tragstruktur 6 ermöglicht wird. In einer alternativen Ausführungsform ist das Strukturbauteil 9 eine dreidimensionale Struktur mit einzelnen Kammern. Die einzelnen Kammern des Strukturbauteils 9 sind über Stege voneinander getrennt. Die Kammern haben in Ihrer Draufsicht eine Gitterstruktur. In einer alternativen Ausgestaltung haben die Kammern in Ihrer Draufsicht eine rauten, eine kreisförmige oder wabenförmige Struktur. Durch die Kammern wird das Strukturbauteil 9 in sich versteift, womit ein besonders steifes Gebäudeelement 5 bereitgestellt werden kann. Das Strukturbauteil 9 kann passgenau in den Raum 8 oder mit Abstand zu den angrenzenden Tragelementen 6.1, 6.2 eingebracht werden. Bei einer passgenauen Einbringung des Strukturbauteils 9 kann der Raum 8 bestmöglich für die Versteifung durch das Strukturbauteil 9 ausgenutzt werden. Das Strukturbauteil kann zudem an dem plattenförmigen Bauteil 6.6 und/oder an den Tragelementen 6.1, 6.2 befestigt werden, um eine mögliche Kraftübertragung weiter zu verbessern.

Bei der Einbringung des Strukturbauteils 9 mit einem Abstand zu den Tragelementen 6.1, 6.2 kann das Strukturbauteil durch ein nachträglich eingebrachtes Füllmaterial in Position gehalten werden oder das Strukturbauteil wird mittels Befestigungsmittel an dem plattenförmigen Bauteil 6.6 oder den Tragelementen 6.1, 6.2 befestigt. Um ein besonders steifes Gebäudeelement 5 bereitzustellen kann das Strukturbauteil 9 mit Hilfe von Adapterstücken 9.1 derart an den Tragelementen 6.1, 6.2 befestigt werden, dass eine Kraftübertragung vom Strukturbauteil 9 zu den Tragelementen 6.1, 6.2 ermöglicht wird, obwohl ein Abstand zwischen dem Strukturbauteil 9 und den Tragelementen 6.1, 6.2 vorliegt. In einem nachgelagerten Schritt wird der Raum 8 mit einem Füllmaterial befüllt. Der Raum 8 kann hierfür mit oder ohne einem Strukturbauteil 9 ausgestattet sein. In Fig.3 ist auf der linken Seite ein Raum 8 ohne Strukturbauteil 9 und mit Blick auf die Figur auf der rechten Seite ein Raum 8 mit einem Strukturbauteil 9 gezeigt. Das Füllmaterial wird durch das Strukturbauteil 9 im Raum 8 verteilt. Das Füllmaterial verteilt sich in die Kammern des Strukturbauteils 9. Das Füllmaterial wird in den Kammern zumindest annähernd in Position gehalten, womit eine Verschiebung des Massemittelpunkts des Gebäudeelements 5 beim Transport verringert bzw. gänzlich vermieden wird. Die Kammern führen zudem zu weniger Bewegungsspielraum des Füllmaterials womit das Füllmaterial weniger Setzung und/oder Abrieb aufweist. Hiermit bleibt die ursprüngliche gleichmäßig Verteilung des Füllmaterials über die Nutzungsdauer des Gebäudeelements 5 erhalten, womit dauerhaft ein guter Schall-, Wärme- und/oder Kälteschutz bereitgestellt werden kann. Weitere Vorteile bei der Nutzung eines Strukturbauteils 9 ergeben sich bei der Nutzung des Gebäudeelements 5, da mögliche Beschädigungen des Gebäudeelements 5 auf die jeweiligen beschädigten Kammern des Strukturbauteils 9 begrenzt sind. Somit ist es möglich ein beschädigtes Gebäudeelement 5 auf einfache Weise im Bereich der beschädigten Kammern derart wieder instand zu setzen, dass der ursprüngliche Zustand wiederhergestellt werden kann. Dieser Vorteil ist besonders ausgeprägt, wenn als Füllmaterial ein schüttbares Füllmaterial verwendet wird, da nur das Füllmaterial der beschädigten Kammern wieder instandgesetzt werden muss.

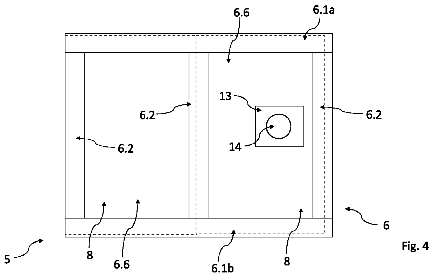

Fig. 4 offenbart ein Gebäudeelement 5 mit einer Tragstruktur 6 aufweisend ein oberes und ein unteres Tragelement 6.1. Zwischen dem oberen und unteren Tragelement 6.1 sind vertikale Tragelemente 6.2 angeordnet, womit zwischen den Tragelementen 6.1, 6.2 Räume 8 gebildet werden. Das Gebäudeelement 5 kann ein Wand-, ein Boden- ein Decken- oder ein Dachelement eines Gebäudes sein. Das Gebäudeelement 5 umfasst ferner plattenförmige Bauteile 6.6, welche in der Ansicht von Fig.4 hinter den Tragelementen 6.1, 6.2 angeordnet sind. Die plattenförmigen Bauteile 6.6 sind derart an der Tragstruktur 6 positioniert und befestigt, dass die Tragstruktur 6 zumindest teilweise abgedeckt ist.

Die plattenförmigen Bauteile 6.6 können eine zusätzliche Komponente 13 aufweisen. Die zusätzliche Komponenten 13 wird in einer dritten Vorfertigungseinrichtung 2.3 an die plattenförmigen Bauteile 6.6 angebracht. Diese zusätzliche Komponente 13 ragt vom plattenförmigen Bauteil 6.6 ab und greift in den Raum 8 zwischen den Tragelementen 6.1, 6.2 ein. Die zusätzliche Komponenten 13 ist in einer Variante ein Hülsenträger 13 mit einer Öffnung 14. Der Hülsenträger 13 wird derart am plattenförmigen Bauteil 6.6 positioniert, dass zumindest die Öffnung 14 des Hülsenträgers mit einer Aussparung im plattenförmigen Bauteil 6.6 zumindest annähernd fluchtet. Der Hülsenträger 13 kann an dem plattenförmigen Bauteil 6.6 mit Hilfe eines separaten Befestigungsmittels oder mittels Pressung befestigt werden. In einer Variante kann durch die Öffnung 14 des Hülsenträgers 13 ein Rohr und/oder ein Kabel geführt werden. In einer besonderen Variante ist das Kabel ein Strom- und/oder Datenkabel zur Versorgung und/oder Ansteuerung eines Beschattungssystems In einer alternativen Variante weist der Hülsenträger 13 ein stark wärmeisolierendes Material auf, um das Gebäudeelement 5 gegenüber einem nachträglich eingebrachtem Abgasrohr gegen Beschädigung, insbesondere einer erhöhten Wärmestrahlung, zu schützen.

In einer Ausgestaltung kann der Raum 8 ein Strukturbauteil 9 aufweisen. Dieses ist um die zusätzliche Komponente 13 angeordnet, um das Gebäudeelement 5 zu versteifen. Der Raum 8 wird mit einem Füllmaterial befüllt. Mit dem Füllmaterial kann der geforderte Brand-, Schall-, Wärme- und/oder Kälteschutz für das Gebäudeelement 5 erfüllt werden.

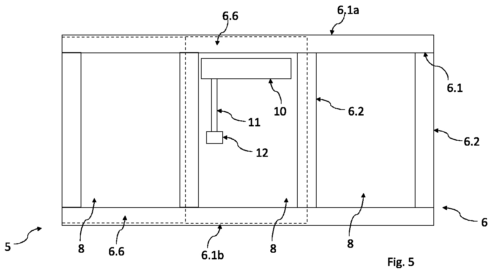

Fig. 5 offenbart ein Gebäudeelement 5 aufweisend eine Tragstruktur 6 mit einem oberen und einem unteren Tragelement 6.1. Zwischen dem oberen und unteren Tragelement 6.1 sind mehrere vertikale Tragelemente 6.2 derart angeordnet, dass die Tragstruktur 6 entsteht. Die Tragstruktur 6 ist zumindest teilweise mit plattenförmigen Bauteilen 6.6, welche in der Draufsicht hinter den Tragelementen 6.1, 6.2 angeordnet sind, bedeckt. Die plattenförmigen Bauteile 6.6 sind derart an der Tragstruktur 6 positioniert, dass die plattenförmigen Bauteile 6.6 zumindest annähernd zumindest mit dem oberen und/oder unteren Tragelement 6.1 abschließen. Ein plattenförmiges Bauteil 6.6 weist mehrere zusätzliche Komponenten 10, 11, 12 auf, welche am plattenförmigen Bauteil 6.6 derart befestigt, insbesondere geschraubt, geklemmt, gepresst, geklebt, genagelt, sind, dass die zusätzliche Komponente 10, 11, 12 in einen Raum 8 zwischen den Tragelementen 6.1, 6.2 ragt. In einer Ausgestaltung sind die zusätzlichen Komponenten ein Teil eines Beschattungssystems insbesondere ein Gehäuse eines Rollladen oder einer Jalousie 10, ein Leerrohr 11 und eine Hohlwanddose 12 für ein Steuermodul. Die einzelnen Komponenten 10, 11, 12 sind derart aneinander angeordnet, dass eine Verbindung vom Gehäuse 10 über das Leerrohr 11 zur Hohlwanddose 12 vorliegt. In einer Variante ist zudem ein Kabel vorgesehen, welches vom Gehäuse 10 durch das Leerrohr 11 zur Hohlwanddose 12 führt. In einem modifizierten nicht gezeigten Ausführungsbeispiel können weitere Komponenten, wie beispielsweise eine Verteilerdose an das plattenförmige Bauteil angebracht werden, um mehrere Kabel des Beschattungssystems auf einfache Weise verbinden zu können. In einer alternativen Ausgestaltung kann nachträglich auf dem Bauplatz des Gebäudes ein Kabel zwischen dem

Gehäuse 10 und der Hohlwanddose 12 durch das Leerrohr 11 derart verlegt werden, dass das Kabel vom Gehäuse 10 durch das Leerrohr 11 zur Hohlwanddose 12 oder in umgekehrter Reihenfolge gezogen wird. Hierdurch ist es möglich ein Gebäudeelement 5 bereitzustellen, welches entweder bereits mit einem Kabel bestückt auf die Baustelle geliefert werden kann oder ein Kabel auf der Baustelle auf einfache Weise in das Gebäudeelement 5 eingebracht werden kann.

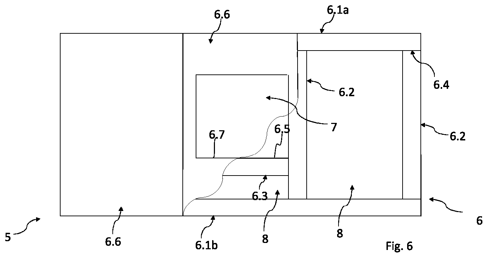

Fig. 6 zeigt ein schematisch dargestelltes Gebäudeelement 5. Das Gebäudeelement 5 weist eine Tragstruktur 6 auf. Die Tragstruktur 6 umfasst eine Vielzahl von Tragelementen 6.1, 6.2, 6.3, insbesondere Tragbalken. Die Tragelementen 6.1, 6.2, 6.3 können ein Material aus einem nachwachsenden Rohstoff, insbesondere Holz und Holzwerkstoffen, Holzverbundwerkstoffen, Kunststoffen, Metallen oder einem anderen für die Eigenschaft als Tragelement 6.1, 6.2, 6.3 bevorzugten Material umfassen. In einer besonders bevorzugten Ausgestaltung umfasst das Tragelement 6.1, 6.2, 6.3 eine Sandwichbaukonstruktion aufweisend eine Lage aus einem Material aus einem nachwachsenden Rohstoff und einer Lage aus einem Kunststoff, insbesondere einem Kunststoffrecyclat und/oder einer Mischung aus einem Kunststoff und einem Holzfaserstoff.

Die Tragstruktur 6 weist ein oberes Tragelemente 6.1, welches einen oberen Abschluss des Gebäudeelements 5 darstellt und ein unteres Tragelement 6.1 auf, welches einen unteren Abschluss des Gebäudeelements 5 darstellt. Zwischen dem oberen und unteren Tragelementen 6.1 sind weitere vertikal angeordnete Tragelemente 6.2 jeweils in einem nahezu rechten Winkel angeordnet. Die jeweiligen Tragelemente 6.1, 6.2 weisen im Kontaktbereich zueinander eine Verbindungsstelle 6.4 auf. Im Bereich der Verbindungsstelle 6.4 werden die Tragelemente 6.1, 6.2 mittels eines Befestigungsmittels verbunden. In einer besonders bevorzugten Ausgestaltung können die Tragelemente 6.1, 6.2, 6.3 im Bereich der Verbindungsstellen 6.4 eine Nut-Feder-Verbindung aufweisen, um einen Verbau der Tragelemente 6.1 zu vereinfachen und eine höhere Kraftübertragung zu ermöglichen. In einem nicht dargestellten weiteren Ausführungsbeispiel ist die Verbindungsstelle 6.4 der Tragelemente 6.1 als Zapfen-Zapfenloch Verbindung ausgebildet.

Fig.6 zeigt ferner ein weiteres innenliegendes Tragelemente 6.3, welches im nahezu rechten Winkel derart zwischen zwei vertikalen Tragelementen 6.2 angeordnet sind, dass durch die Tragelemente 6.1, 6.2, 6.3 eine Aussparung 7 in der Tragstruktur 6 gebildet wird. Die Aussparung 7 kann zur Aufnahme einer Tür, eines Fensters und/oder eines weiteren Bauteils dienen. Die Tragelemente 6.1, 6.2, 6.3 versteifen die Tragstruktur 6 um die Aussparung 7 derart, dass eine Tür, ein Fenster und/oder ein weiteres Bauteil an den Tragelementen 6.1, 6.2, 6.3 befestigt werden kann.

Ferner offenbart Fig. 6 ein plattenförmiges Bauteil 6.6. Das plattenförmige Bauteil 6.6 ist auf der Tragstruktur 6 derart positioniert und abgelegt, dass das plattenförmige Bauteil 6.6 mit dem oberen und dem unteren Tragelement 6.1 zumindest annähernd abschließt. In einer bevorzugten Ausführung schließt das plattenförmige Bauteil 6.6 mit einem Mindermaß zu den Tragelementen 6.1 ab. Durch das Ablegen einer auf die Tragstruktur 6 angepassten plattenförmigen Bauteils 6.6 können weitere Nachbearbeitungsmaßnahmen, wie insbesondere das nachträgliche Anpassen der plattenförmigen Bauteile 6.6 auf das Maß der Tragstruktur 6, reduziert werden oder in ganz besonderen Fällen gänzlich entfallen.

Das plattenförmige Bauteil 6.6 weist ferner eine Kante 6.7 auf. Das plattenförmige Bauteil 6.6 wird derart auf der Tragstruktur 6 abgelegt, dass die Kante 6.7 des plattenförmigen Bauteils 6.6 zumindest annähernd mit einer Kante 6.5 eines zumindest teilweise abgedeckten Tragelements 6.1 parallel ausgerichtet ist. In einer bevorzugten Ausführungsform ist die Kante 6.7 eines plattenförmigen Bauteils 6.6 mit einer Kante einer Aussparung 7 zumindest annähernd parallel. In einer besonders bevorzugten Ausführung ist eine Kante 6.7 eines plattenförmigen Bauteils 6.6 zu einer Kante einer Aussparung 7 sowie zumindest eine weitere Kante des plattenförmigen Bauteils 6.6 zu einer weiteren Kante einer Aussparung 7 jeweils annähernd parallel. Hiermit wird erstmalig ein plattenförmiges Bauteil 6.6 zum Abdecken einer Tragstruktur 6 mit einer Aussparung 7 bereitgestellt, welches durch die Parallelität der Kanten 6.7 des plattenförmigen Bauteils 6.6 und der Aussparung weitere Nachbearbeitungsmaßnahmen, wie ein nachträgliches Ausschneiden der Aussparung 7 aus dem plattenförmigen Bauteile 6.6, reduziert bzw. entfallen in besonders bevorzugten Fällen. Ferner offenbart Fig.6 einen Raum 8 zwischen den Tragelementen 6.1, 6.2, 6.3. Der Raum 8 wird auf einer Seite mit einem plattenförmigen Bauteil 6.6 begrenzt. In einem nachgelagerten Verfahrensschritt kann der Raum 8 insbesondere mit einem Füllmaterial befüllt werden. Hiermit ist es möglich, einen verbesserten Brand-, Schall-, Wärme- und/oder Kälteschutz bereitzustellen. In einer besonders bevorzugten Ausgestaltung wird in dem Raum 8 ein Strukturbauteil 9 und ein Füllmaterial vorgesehen. Das Strukturbauteil 9 kann das Füllmaterial zumindest annähernd in Position halten. Das Strukturbauteil 9 kann an den angrenzenden Tragelementen 6.1, 6.2, 6.3 und/oder an dem angrenzenden plattenförmigen Bauteil 6.6 befestigt werden. Das Strukturbauteil 9 kann zu einer weiteren Versteifung des Gebäudeelements 5 genutzt werden.

Die Herstellung von mehrteiligen Gebäudeelementen 5 umfasst die nachfolgenden Verfahrensschritte: Bereitstellen und Positionieren von Tragelementen 6.1, 6.2, 6.3. Anschließend werden die Tragelemente 6.1, 6.2, 6.3 aneinander befestigt. Hiermit wird eine Tragstruktur 6 bereitgestellt. Anschließend werden bereitgestellte plattenförmigen Bauteile 6.6 werden auf der Tragstruktur 6 abgelegt. Das Ablegen erfolgt derart, dass die Tragstruktur 6 auf einer Seite zumindest annäherungsweise abgedeckt wird. In einem alternativen Verfahrensschritt werden plattenförmige Bauteile 6.6 mit einer Aussparung 7 oder zumindest einem Teil einer Aussparung 7 auf der Tragstruktur 6 abgelegt. Hiermit ist es möglich ein Gebäudeelement mit einer Aussparung 7 für einen Durchgang, eine Tür, ein Fenster und/oder ein weiteres Bauteil bereitzustellen. Die plattenförmigen Bauteile 6.6 werden nach dem Ablegen an der Tragstruktur 6 befestigt. Die abgelegten plattenförmigen Bauteile 6.6 bilden eine erste Lage an plattenförmigen Bauteilen 6.6 auf der Tragstruktur 6. Sofern für das herzustellenden Gebäudeelement erforderlich können die Verfahrensschritte zum Ablegen der plattenförmigen Bauteile 6.6 wiederholt werden. Hiermit kann ein Gebäudeelement mit einer Tragstruktur 6 und mehreren Lagen an plattenförmigen Bauteilen 6.6 bereitgestellt werden.

Anschließend wird die Tragstruktur 6 derart gewendet, dass die Tragstruktur 6 auf den plattenförmigen Bauteilen 6.6 aufliegt. Hiermit kann der Raum zwischen den Tragelementen 6.1, 6.2, 6.3 bearbeitet werden. Anschließend kann ein Strukturbauteil 9 auf das plattenförmige Bauteil 6.6 in den Raum zwischen den Tragelementen 6.1, 6.2, 6.3 gelegt werden. In einem weiteren Verfahrensschritt kann das Strukturbauteil 9 an dem plattenförmigen Bauteil 6.6 und/oder den angrenzenden Tragelementen 6.1, 6.2, 6.3 befestigt werden. Anschließend wird ein Füllmaterial in den Raum zwischen den Tragelementen 6.1, 6.2, 6.3 eingebracht. Das Füllmaterial wird anhand des Strukturbauteils 9 verteilt und zumindest annähernd in Position gehalten. In einem nachgelagerten Verfahrensschritt werden plattenförmige Bauteile 6.6 bereitgestellt. Diese plattenförmigen Bauteile 6.6 werden auf der Tragstruktur 6 positioniert und derart abgelegt, dass das Strukturbauteil 9 und/oder das Füllmaterial von mehreren Seiten durch die Tragstruktur 6 und die plattenförmigen Bauteile 6.6 eingeschlossen werden. In einem alternativen Verfahrensschritt können plattenförmige Bauteile aufweisend eine (abkragende) zusätzliche Komponente bereitgestellt werden. Diese werden derart auf der Tragstruktur 6 positioniert und abgelegt, dass die zusätzliche Komponenten in den Raum zwischen den Tragelementen 6.1, 6.2, 6.3 ragt.

Anschließend wird das Gebäudeelement zumindest zwischenzeitlich gelagert, bevor es auf einen Bauplatz befördert wird.

Referenzliste:

| | |
|---|---|
| 1 | Hauptfertigungslinie |
| 1.1 | Tragstrukturstation |
| 1.2 | Abdeckstation |
| 1.3 | Modulintegrationsstation |
| 1.4 | Wendestation |
| 1.5 | Füllstation |
| 1.6 | weitere Abdeckstation |
| 1.7 | Gebäudeelementlager |
| 2 | erste Vorfertigungslinie |
| 2.1 | erste Vorfertigungseinrichtung |
| 2.2 | zweite Vorfertigungseinrichtung |
| 2.3 | dritte Vorfertigungseinrichtung |
| 2.3a | Modullager |

| | |
|---|---|
| 2.3b | Modulfördereinheit |
| 2.3c | Montageeinheit |
| 2.4 | vierte Vorfertigungseinrichtung |
| 3 | zweite Vorfertigungslinie |
| 3.1 | erstes Lager |
| 3.2 | Plattenaufteilvorrichtung |
| 3.3 | zweites Lager |
| 4 | tragende Struktur einer Werkshalle |
| 5 | Gebäudeelement |
| 6 | Tragstruktur |
| 6.1a | oberes Tragelement |
| 6.1.b | unteres Tragelement |
| 6.2 | vertikales Tragelement |
| 6.3 | Innenliegendes Tragelement |
| 6.4 | Verbindungsstelle Tragelemente |
| 6.5 | Kante eines Tragelements |
| 6.6 | plattenförmiges Bauteil |
| 6.7 | Kante eines plattenförmigen Bauteils |
| 7 | Aussparung |
| 8 | Raum zwischen den Tragelementen |
| 9 | Strukturbauteil |
| 9.1 | Adapterstück |
| 10 | Gehäuse |
| 11 | Leerrohr |
| 12 | Hohlwanddose |
| 13 | Hülsenträger |
| 14 | Öffnung |

**Patentansprüche**

1. Verfahren zur Herstellung von mehrteiligen Gebäudeelementen (5) aufweisend mehrerer Tragelemente (6.1,6.2,6.3), insbesondere Tragbalken, umfassend folgende Arbeitsschritte:

   - Positionieren der Tragelemente (6.1,6.2,6.3) auf einem Arbeitstisch,
   - Herstellen einer Tragstruktur (6) durch Befestigen der Tragelemente (6.1,6.2,6.3) aneinander und/oder Fixieren der Tragelemente (6.1,6.2,6.3) gegeneinander,
   - Bereitstellen und Ablegen eines plattenförmigen Bauteils (6.6) auf der Tragstruktur (6), wobei das plattenförmige Bauteil (6.6) derart abgelegt wird, dass die Tragstruktur (6) auf einer Seite zumindest annäherungsweise abgedeckt wird,
   - Befestigen des plattenförmigen Bauteils (6.6) an der Tragstruktur (6).

2. Verfahren nach Anspruch 1, wobei das plattenförmige Bauteil (6.6) in einer Vorfertigungslinie (2,3) derart bearbeitet wird, dass das plattenförmige Bauteil (6.6) einem Maß, insbesondere der Höhe, der Tragstruktur (6) annäherungsweise, insbesondere mit einem Mindermaß, entspricht.

3. Verfahren nach einem der vorherigen Ansprüche, wobei das plattenförmige Bauteil (6.6) in einer Vorfertigungslinie (2, 3) derart bearbeitet wird, dass das plattenförmige Bauteil (6.6) zumindest teilweise eine Aussparung (7), insbesondere eine Aussparung (7) für einen Durchgang, eine Tür, ein Fenster und/oder ein weiteres Bauteil, aufweist.

4. Verfahren nach Anspruch 3, wobei die Aussparung (7) des plattenförmigen Bauteils (6.6) beim Ablegen und Positionieren auf der Tragstruktur (6) derart erfolgt, dass eine Kante (6.7) des plattenförmigen Bauteils (6.6) annäherungsweise parallel zu einer Kante einer Aussparung im Gebäudeelement (5) positioniert wird.

5. Verfahren nach einem der vorherigen Ansprüche, wobei ein plattenförmiges Bauteil (6.6) mittels eines Roboters, an der Tragstruktur (6) abgelegt, positioniert und/oder befestigt, wird, wobei der Roboter das plattenförmige Bauteil (6.6) aus einem Vorrat von bearbeiteten plattenförmigen Bauteilen und weiteren plattenförmigen Bauteilen, derart auswählt, dass die Tragstruktur (6) zumindest teilweise abgedeckt wird, wobei die bearbeiteten plattenförmigen Bauteile von einer Vorfertigungslinie (2,3) über eine Fördereinheit, zu dem Roboter gefördert wird.

6. Verfahren nach einem der vorherigen Ansprüche, wobei eine Vielzahl von plattenförmigen Bauteilen (6.6) auf der Tragstruktur (6) derart abgelegt werden, dass die plattenförmigen Bauteile (6.6) eine erste Lage auf der Tragstruktur (6) bilden, wobei der Kontaktbereich zweier aneinander angrenzender plattenförmiger Bauteile (6.6) zumindest annähernd in der Mitte eines Tragelements (6.1,6.2,6.3) positioniert ist, wobei die plattenförmigen Bauteile (6.6) im Verhältnis zu den Tragelementen (6.1,6.2,6.3) einen 1,5 bis 10 mal, bevorzugt 3 bis 6 mal so hohen Längenausdehnungskoeffizienten $\alpha$ aufweisen.

7. Verfahren nach einem der vorherigen Ansprüche, wobei ein plattenförmiges Bauteil (6.6) in einer dritten Vorfertigungseinrichtung (2.5) derart bearbeitet wird, dass dem plattenförmigen Bauteil (6.6) eine zusätzliche Komponente hinzugefügt wird, wobei die zusätzliche Komponente ein Teil eines Beschattungssystems ist.

8. Verfahren nach Anspruch 7, wobei ein plattenförmiges Bauteil (6.6) derart an der Tragstruktur (6) angeordnet wird, dass die zusätzliche Komponente des plattenförmigen Bauteils (6.6) in einen Raum (8) zwischen zwei Tragelementen (6.1,6.2,6.3) der Tragstruktur (6) ragt.

9. Verfahren nach Anspruch 7, wobei das Gebäudeelement (5) eine erste Lage von plattenförmigen Bauteilen (6.6) aufweist, welche eine Aussparung aufweist, insbesondere eine Aussparung, welche durch ein spanabhebendes Verfahren an zumindest einem plattenförmigen Bauteil (6.6) der ersten Lage gebildet ist, wobei die Aussparung derart gestaltet ist, dass die zusätzliche Komponente im montierten Zustand in die Aussparung ragt.

10. Verfahren nach einem der vorherigen Ansprüche, wobei mehrere Tragelemente (6.1, 6.2, 6.3) zu einer Tragstruktur (6) eines Gebäudeelements (5) auf einer Hauptfertigungslinie (1) mit einer Bearbeitungsvorrichtung bearbeitet werden, während zeitgleich auf einer Vorfertigungslinie (2,3), welche eine Vorfertigungseinrichtung in Form einer weiteren Bearbeitungsvorrichtung für die Bearbeitung eines Bauteils eines Gebäudeelements (5) aufweist, ein Bauteil eines Gebäudeelements (5) bearbeitet wird.

11. Verfahren nach Anspruch 10, wobei das Bauteil auf einer Vorfertigungslinie (2, 3) bearbeitet wird und nachfolgend an eine Bearbeitungsvorrichtung der Hauptfertigungslinie (1) gefördert wird, um ein Gebäudeelement (5) zu erzeugen.

12. Verfahren nach einem der vorherigen Ansprüche aufweisend weitere Verfahrensschritte:

    - Wenden des Gebäudeelements (5) derart, dass die Tragstruktur (6) auf dem plattenförmigen Bauteil (6.6) auf einem Arbeitstisch derart aufliegt, dass ein Raum (8) zwischen den Tragelementen (6.1,6.2,6.3) zugänglich wird,
    - Einlegen eines Strukturbauteils (9) auf das plattenförmige Bauteil (6.6) in den Raum (8) zwischen den Tragelementen (6.1,6.2,6.3) des Gebäudeelements (5),
    - Einbringen eines Füllmaterials in den Raum (8) zwischen den Tragelementen (6.1,6.2,6.3), wobei das Füllmaterial anhand des Strukturbauteil (9) im Raum (8) verteilt und zumindest annähernd in Position gehalten wird.

13. Verfahren nach Anspruch 12, wobei das Füllmaterial

    a) ein Schüttgut, insbesondere ein inertes Schüttgut, mit einer Körnung von 1 bis 10 mm, bevorzugt mit einer Körnung von 2 bis 5 mm,
    b) ein einblasbares Material, insbesondere ein faserbasiertes und/oder kugelförmiges Material, bevorzugt Kunststoffkugeln und/oder
    c) ein einlegbares Material, insbesondere ein faserhaltiges Bahnmaterial, bevorzugt ein holzfaserhaltiges Bahnmaterial,

    umfasst.

14. Verfahren nach Anspruch 12 oder13, wobei das Strukturbauteil (9) eine dreidimensionale Struktur mit mehreren Streben und/oder Stegen aufweist, welche in einer Draufsicht die Form einer Vielzahl von Kreisen, Rechtecken und/oder Waben aufweist.

15. Verfahren nach einem der Ansprüche 12 bis 14, wobei das Strukturbauteil (9) ein faserstoffhaltiges Material mit einer Vielzahl von annäherungsweise sechseckigen Wabenstrukturen umfasst und ein plattenförmiges faserstoffhaltiges Element aufweist, welches das Strukturbauteil einseitig bedeckt und ein Schüttgut zumindest annähernd in Position hält, wobei das Schüttgut ein Material mit einer Schüttdichte von 1.000 kg/m$^3$ bis 2.000 kg/m$^3$, vorzugsweise 1.400 kg/m$^3$ bis 1.600 kg/m$^3$, umfasst.

16. Verfahren nach Anspruch 12 bis 15, aufweisend einen weiteren Verfahrensschritt, wobei die Tragstruktur (6) mit plattenförmigen Bauteilen (6.6) belegt wird, wobei die plattenförmigen Bauteile (6.6) derart auf der Tragstruktur (6) abgelegt werden, dass ein Strukturbauteil (9) und/oder ein Füllmaterial von mehreren Seiten durch die Tragstruktur (6) und die plattenförmigen Bauteile (6.6) eingeschlossen sind.

17. Vorfertigungslinie (2, 3) aufweisend

    a) eine Montageeinheit (2.3c) oder eine Plattenaufteilvorrichtung (3.2) zur Bearbeitung plattenförmiger Bauteile (6.6) und
    b) vorzugsweise ein Modullager (2.3a) oder ein zweites Lager (3.3), wobei die Ablage der bearbeiteten plattenförmigen Bauteile (6.6) im Modullager (2.3a) oder im zweiten Lager (3.3) in umgekehrter Reihenfolge zur Entnahme für einen nachgelagerten Bearbeitungsschritt erfolgt, und
    c) eine Fördereinheit, insbesondere eine selbststeuernde Fördereinheit, um die bearbeiteten plattenförmigen Bauteile (6.6) der Hauptfertigungslinie (1) zuzuführen.

18. Vorfertigungslinie (2, 3) nach Anspruch 17, wobei die Montageeinheit (2.3c) oder die Plattenaufteilvorrichtung (3.2) eine spanabhebende Bearbeitungsvorrichtung, insbesondere eine Fräs-, Säge- und/oder Schneidvorrichtung, zur Anpassung der Maße oder zur Erzeugung von Ausnehmungen in einem plattenförmigen Bauteil (6.6) umfasst.

19. Vorfertigungslinie (2, 3) nach Anspruch 17 oder 18, wobei die Montageeinheit (2.3c) eine Bearbeitungsvorrichtung zur Befestigung einer Komponente an einem plattenförmigen Bauteil (6.6) umfasst, wobei die Komponente ein Teil eines Beschattungssystems umfasst.

20. Fertigungsanlage zur Herstellung von mehrteiligen Gebäudeelementen (5) aufweisend eine Hauptfertigungslinie (1) mit einer Bearbeitungsvorrichtung und einer Vorfertigungslinie (2, 3), insbesondere nach einem der Ansprüche 17 bis 19, wobei die Vorfertigungslinie (2, 3) im Bereich der entsprechenden Bearbeitungsvorrichtung der Hauptfertigungslinie (1) derart angeordnet ist, dass das bearbeitete Bauteil der Vorfertigungslinie (2, 3) zum Zeitpunkt der weiteren Bearbeitung an die entsprechende Bearbeitungsvorrichtung der Hauptfertigungslinie (1) gefördert wird.

21. Fertigungsanlage nach Anspruch 20, wobei die Hauptfertigungslinie (1) eine erste Mehrzahl von Bearbeitungsvorrichtungen aufweist, welche in einer Linie hintereinander angeordnet sind und die erste Vorfertigungslinie (2) eine zweite Mehrzahl von Bearbeitungsvorrichtungen aufweist, wobei die erste Vorfertigungslinie (2) auf einer Seite benachbart zu der Hauptfertigungslinie (1), insbesondere zwischen der Hauptfertigungslinie (1) und einer tragenden Struktur einer Werkshalle (4), angeordnet ist.

22. Fertigungsanlage nach einem der Ansprüche 20 oder 21, wobei eine zweite Vorfertigungslinie (3) ein erstes Lager (3.1), eine Plattenaufteilvorrichtung (3.2), insbesondere eine spanabhebende Bearbeitungsvorrichtung, insbesondere eine Fräs-, Säge- und/oder Schneidvorrichtung, für plattenförmige Bauteile (6.6) und ein zweites Lager (3.3) für bearbeitete plattenförmige Bauteile (6.6) aufweist, wobei das erste Lager(3.1), die Plattenaufteilvorrichtung (3.2) und das zweite Lager (3.3) in einer Linie hintereinander angeordnet sind und die zweite Vorfertigungslinie (3) in Bezug auf die Hauptfertigungslinie (1) nahezu im rechten Winkel zur Hauptfertigungslinie (1) und insbesondere auf der gegenüberliegenden Seite der Hauptfertigungslinie (1) bezogen auf eine erste Vorfertigungslinie (2), derart angeordnet ist, dass zwischen dem zweiten Lager (3.3) der zweiten Vorfertigungslinie (3) und einer oder mehrerer Bearbeitungsvorrichtungen der Hauptfertigungslinie (1) eine Fördereinheit vorgesehen ist.

Fig. 1

Fig. 2

Fig. 3

EP 4 571 006 A1

Fig. 4

Fig. 5

Fig. 6

Europäisches
Patentamt

European
Patent Office

Office européen
des brevets

**EUROPÄISCHER RECHERCHENBERICHT**

Nummer der Anmeldung

EP 24 21 6398

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 835 242 A2 (MOPAC SYSTEMS INTERNAT S A [LU]) 11. Februar 2015 (2015-02-11) * Absätze [0062] - [0160] * * Abbildungen * ----- | 1-22 | INV. E04C2/296 E04B1/18 E04B1/26 E04B1/76 |
| X | US 2011/302877 A1 (GILGAN PETER [US] ET AL) 15. Dezember 2011 (2011-12-15) * Absätze [0040] - [0062] * * Abbildungen * ----- | 1-22 | E04B2/70 E04C2/38 E04C2/24 |
| A | US 2005/188649 A1 (HAGEN HANS T JR [US]) 1. September 2005 (2005-09-01) * Abbildungen * ----- | 1-22 | |
| A | US 2022/193802 A1 (WALCH ALEXANDER [AT] ET AL) 23. Juni 2022 (2022-06-23) * Absätze [0032] - [0060] * * Abbildungen * ----- | 17-22 | |
| A | WO 97/04188 A1 (COHEN BROTHERS HOMES L L C [US]) 6. Februar 1997 (1997-02-06) * Seite 19, Zeile 1 - Seite 40, letzter Zeile * * Abbildungen * ----- | 17-22 | RECHERCHIERTE SACHGEBIETE (IPC) E04C E04B |

Der vorliegende Recherchenbericht wurde für alle Patentansprüche erstellt

| Recherchenort | Abschlußdatum der Recherche | Prüfer |
|---|---|---|
| München | 3. April 2025 | Durrenberger, Xavier |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 21 6398

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2025

| Im Recherchenbericht angeführtes Patentdokument | Datum der Veröffentlichung | Mitglied(er) der Patentfamilie | Datum der Veröffentlichung |
|---|---|---|---|
| EP 2835242 A2 | 11-02-2015 | AU 2011213957 A1 | 27-09-2012 |
| | | BE 1019669 A5 | 04-09-2012 |
| | | CA 2789635 A1 | 18-08-2011 |
| | | DK 2835242 T3 | 08-02-2021 |
| | | EP 2533960 A1 | 19-12-2012 |
| | | EP 2835242 A2 | 11-02-2015 |
| | | ES 2660545 T3 | 22-03-2018 |
| | | ES 2845634 T3 | 27-07-2021 |
| | | HR P20210182 T1 | 19-03-2021 |
| | | HU E052839 T2 | 28-05-2021 |
| | | NZ 602190 A | 28-03-2014 |
| | | PL 2835242 T3 | 04-05-2021 |
| | | PT 2835242 T | 10-02-2021 |
| | | RU 2012138278 A | 20-03-2014 |
| | | RU 2016135801 A | 11-12-2018 |
| | | SI 2835242 T1 | 30-04-2021 |
| | | US 2013037984 A1 | 14-02-2013 |
| | | US 2015375434 A1 | 31-12-2015 |
| | | US 2017095952 A1 | 06-04-2017 |
| | | WO 2011098984 A1 | 18-08-2011 |
| US 2011302877 A1 | 15-12-2011 | CA 2573687 A1 | 17-02-2008 |
| | | US 2008168741 A1 | 17-07-2008 |
| | | US 2011302877 A1 | 15-12-2011 |
| | | WO 2008083478 A1 | 17-07-2008 |
| US 2005188649 A1 | 01-09-2005 | US 2005188649 A1 | 01-09-2005 |
| | | US 2006260267 A1 | 23-11-2006 |
| US 2022193802 A1 | 23-06-2022 | CN 114589353 A | 07-06-2022 |
| | | EP 4008506 A1 | 08-06-2022 |
| | | US 2022193802 A1 | 23-06-2022 |
| WO 9704188 A1 | 06-02-1997 | AU 709284 B2 | 26-08-1999 |
| | | CA 2226874 A1 | 06-02-1997 |
| | | CN 1193368 A | 16-09-1998 |
| | | DE 69618598 T2 | 19-09-2002 |
| | | EP 0839237 A1 | 06-05-1998 |
| | | ES 2166455 T3 | 16-04-2002 |
| | | PL 324501 A1 | 25-05-1998 |
| | | US 6253504 B1 | 03-07-2001 |
| | | WO 9704188 A1 | 06-02-1997 |

EPO FORM P0461

Für nähere Einzelheiten zu diesem Anhang : siehe Amtsblatt des Europäischen Patentamts, Nr.12/82